(19) Europäisches Patentamt
European Patent Office
Office européen des brevets

(11) **EP 2 548 803 B1**

(12) **FASCICULE DE BREVET EUROPEEN**

(45) Date de publication et mention
de la délivrance du brevet:
**05.08.2015 Bulletin 2015/32**

(51) Int Cl.:
***B64C 27/04*** *(2006.01)*     ***B64D 31/06*** *(2006.01)*
***G05D 1/00*** *(2006.01)*     ***B60K 6/00*** *(2007.10)*

(21) Numéro de dépôt: **12004803.8**

(22) Date de dépôt: **27.06.2012**

(54) **Procédé de contrôle d'un groupe de moteurs et aéronef**

Kontrollverfahren für eine Gruppe von Motoren, und Luftfahrzeug

Method for controlling a group of engines and aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.07.2011 FR 1102225**

(43) Date de publication de la demande:
**23.01.2013 Bulletin 2013/04**

(73) Titulaires:
• **Airbus Helicopters
13725 Marignane Cedex (FR)**
• **EADS (European Aeronautic Defence and Space
Company EADS France)
75016 Paris (FR)**

(72) Inventeurs:
• **Dyrla, Nadine
13320 Bouc Bel Air (FR)**

• **Corpron, Alban
13300 Salon De Provence (FR)**
• **Joubert, Emmanuel
92130 Issy Les Moulineaux (FR)**
• **Smaoui, Hichem
75007 Paris (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
**EP-A- 2 327 625**     **DE-A1-102007 017 332**
**US-A- 3 963 372**     **US-A1- 2009 186 320**

**Description**

La présente invention concerne un procédé de contrôle d'un groupe de moteurs entraînant un rotor, tel qu'un rotor de sustentation voire de propulsion d'un giravion. De plus, l'invention concerne un aéronef mettant en oeuvre ce procédé.

Dès lors, l'invention se situe dans le domaine technique des groupes de moteurs d'aéronefs, et notamment des groupes de moteurs d'aéronefs à voilure tournante comprenant au moins un moteur électrique et une pluralité de moteurs thermiques.

Classiquement, un aéronef à voilure tournante comprend en principe un groupe de moteurs comprenant au moins un moteur thermique, tel qu'un moteur thermique de type moteur à pistons ou à turbine. Une boîte de réduction de vitesse lie le groupe de moteurs au rotor principal d'avancement et de sustentation: il s'agit de la boîte de transmission principale de puissance.

Les limitations thermiques d'un moteur thermique, et les limitations en couple d'une boîte de transmission principale, permettent de définir une enveloppe de fonctionnement de chaque moteur thermique englobant trois régimes normaux d'utilisation:

- le régime de décollage correspondant à un niveau de couple pour la boîte de transmission principale et un échauffement du moteur thermique admissibles pendant un temps limité sans dégradation notable, ce régime de décollage étant défini par une puissance maximale au décollage PMD et une durée d'utilisation de cette puissance maximale au décollage généralement de l'ordre de cinq minutes,

- le régime maximal continu, ce régime de décollage étant défini par une puissance maximale en continu PMC correspondant environ à 90% de la puissance maximale au décollage PMD et par une durée d'utilisation de cette puissance maximale en continu généralement illimitée,

- le régime de ralenti minimisant la consommation en carburant, l'autonomie du moteur thermique étant néanmoins conservée durant ce régime de fonctionnement.

Le régime de ralenti peut par exemple être piloté en maintenant la vitesse de déplacement d'un organe mobile du moteur thermique à une valeur donnée.

Par exemple, on peut piloter la vitesse de rotation d'un générateur de gaz dans le cadre d'un turbomoteur. La valeur donnée est fixée par le constructeur pour notamment optimiser la consommation en carburant du moteur thermique et assurer l'autonomie de fonctionnement du moteur thermique.

A titre de variante, dans le cadre d'un turbomoteur à turbine libre, on peut piloter la vitesse de rotation de la turbine libre.

Par ailleurs, un aéronef et notamment un aéronef à voilure tournante peut comprendre un ou plusieurs moteurs thermiques. Par exemple, trois catégories de giravions peuvent être distinguées.

La première catégorie est relative aux giravions monomoteurs sur lesquels un seul moteur thermique est agencé, un moteur à pistons ou à turbine. En l'absence d'autre source de puissance, il n'est pas possible d'opérer une répartition de la fourniture de puissance entre différentes sources,

La deuxième catégorie est relative aux giravions bimoteur sur lesquels deux moteurs thermiques sont agencés, deux moteurs à pistons ou à turbine. Ces moteurs sont régulés conjointement pour fournir chacun la moitié de la puissance requise à chaque instant en vol, cette puissance étant alors dénommée « puissance requise » ou « puissance courante » par la suite.

De manière alternative, ces deux moteurs thermiques peuvent être régulés pour que certains de leurs paramètres de fonctionnement soient égaux, tels que par exemple la vitesse de rotation du générateur de gaz ou la température de contrôle dans le cadre de moteurs thermiques.

La régulation des moteurs thermiques n'autorise donc pas le fonctionnement dissymétrique de ces moteurs thermiques, hors panne de l'un des deux. En particulier, l'arrêt volontaire d'un des moteurs ou sa mise au ralenti en vol est à proscrire pour des raisons de sécurité.

La troisième catégorie est relative aux giravions trimoteur assimilables aux giravions bimoteur en termes de fonctionnement.

Ainsi, sur un giravion pourvu d'une pluralité de moteurs thermiques, on tend à répartir équitablement la puissance à développer entre ces différents moteurs thermiques.

Cette répartition de puissance peut toutefois induire l'utilisation des moteurs thermiques dans des plages de fonctionnement à faible rendement énergétique.

En effet, on note que la consommation spécifique d'un moteur à turbine diminue concomitamment à l'augmentation de la puissance développée par ce moteur thermique, jusqu'à un point optimal appelé « point d'adaptation »,

# EP 2 548 803 B1

généralement proche de la puissance maximale au décollage PMD. De manière surprenante, plus un moteur à turbine développe une puissance importante, plus sa consommation spécifique est optimisée, jusqu'aux environs de la puissance maximale au décollage PMD.

Dès lors, en répartissant la puissance requise de manière équivalente entre les différents moteurs thermiques d'un groupe de moteurs, on peut tendre à faire fonctionner l'ensemble des moteurs thermiques dans des plages de fonctionnement non optimisées d'un point de vue rendement énergétique.

La durée du vol ou la distance parcourue par l'aéronef peuvent alors être réduites.

En effet, on connaît deux vitesses d'avancement caractéristiques pour un giravion :

- une première vitesse connue sous l'acronyme « Vbe » soit « Velocity of Best Endurance » en langue anglaise, correspondant à la vitesse horizontale offrant une endurance maximale au giravion pour lui permettre de voler le plus longtemps possible avec une quantité donnée de carburant,

- une deuxième vitesse connue sous l'acronyme « Vbr » soit « Velocity of Best Range » en langue anglaise, correspondant à la vitesse horizontale offrant une distance franchissable maximale au giravion pour lui permettre de voler le plus loin possible avec une quantité donnée de carburant.

Toutefois, on constate par exemple que la première vitesse pourrait être généralement atteinte par un giravion bimoteur ou trimoteur à l'aide d'un seul moteur délivrant une puissance inférieure ou égale à la puissance maximale en continu PMC.

On comprend donc que pour le vol d'un giravion à cette première vitesse et en mettant en oeuvre tous les moteurs thermiques, chaque moteur doit développer une puissance relativement modérée, engendrant un rendement énergétique moyen.

On pourrait alors envisager d'arrêter en vol un moteur pour augmenter ce rendement énergétique. Toutefois, si l'arrêt d'un moteur thermique est possible, on note que le domaine de vol est alors généralement très restreint.

En effet, on constate par exemple qu'il est souvent difficile voire impossible de voler à la deuxième vitesse avec un seul moteur thermique sur un giravion bimoteur.

Par suite, effectuer des missions de longue distance sur un seul moteur nécessite de réduire la vitesse d'avancement. Dans ce cas, le gain de consommation en carburant apporté par une utilisation optimale du turbomoteur peut être contrecarré par la baisse de performance énergétique du giravion, ce giravion ne fonctionnant plus à la deuxième vitesse optimale pour ce type de mission. En outre, le temps de parcours peut être augmenté de manière significative.

Dès lors, un vol réalisé pour franchir une grande distance doit favorablement être effectué en sollicitant tous les moteurs thermiques, néanmoins dans une plage de fonctionnement qui n'est pas optimisée d'un point de vue rendement énergétique.

La présente invention a alors pour objet de proposer un procédé de contrôle d'un groupe de moteurs muni d'au moins un organe électrique et d'au moins deux moteurs thermiques pour atteindre par exemple une destination éloignée en optimisant le rendement énergétique global de l'aéronef.

On note que l'état de la technique comprend le document FR2914697 relatif à un dispositif d'assistance aux phases transitoires d'accélération et de décélération d'un aéronef.

Ce document FR2914697 présente un turbomoteur comportant un générateur de gaz, une turbine libre entraînée en rotation par le flux de gaz généré par le générateur de gaz, et un moteur auxiliaire.

Pour éviter un phénomène de pompage connu, un motoriste prévoit généralement une marge appelée marge de pompage limitant la capacité d'accélération du turbomoteur. Ce document FR2914697 vise un turbomoteur pour hélicoptère présentant une capacité d'accélération optimisée tout en ayant la même marge de pompage que celle du turbomoteur de l'art antérieur. Le turbomoteur comporte alors un moteur auxiliaire couplé à un arbre du générateur de gaz pour fournir une quantité d'énergie cinétique de rotation supplémentaire à l'arbre lors d'une phase d'accélération du turbomoteur.

Le document FR2933910 présente une installation hybride pourvue d'au moins un moteur thermique et d'au moins un moteur électrique.

Le document DE102007017332 présente un aéronef comprenant un propulseur, un moteur à combustion interne ayant une prise d'entraînement permettant d'entrainer le propulseur et une machine électrique, le moteur à combustion interne coopérant avec la machine électrique.

L'invention a alors pour objet un procédé de contrôle d'un groupe de moteurs d'un aéronef développant une puissance requise pour entraîner un rotor, ce groupe de moteurs étant muni d'au moins un organe électrique relié à un moyen de stockage d'énergie électrique et d'un premier nombre de moteurs thermiques supérieur ou égal à deux. L'organe électrique peut alors comprendre au moins un moteur électrique pouvant fonctionner dans un mode moteur électrique et dans un mode générateur électrique, le moyen de stockage pouvant comprendre au moins une batterie.

Chaque moteur thermique peut de plus développer une puissance continue sans limitation de durée durant un

3

régime continu, telle que la puissance maximum continue PMC explicitée précédemment.

Ce procédé est notamment remarquable en ce qu'une unité de traitement exécute des instructions mémorisées pour évaluer une condition principale selon laquelle le groupe de moteurs peut développer la puissance requise en mettant au repos un moteur thermique, et lorsque cette condition principale est vérifiée pour :

- mettre au repos un moteur thermique, et

- pour accélérer les moteurs thermiques non mis au repos à savoir pour accélérer un deuxième nombre de moteurs thermiques non mis au repos égal au dit premier nombre moins une unité afin de développer au maximum une puissance seuil à l'aide des moteurs thermiques, la puissance seuil étant atteinte quand chaque moteur thermique non mis au repos développe ladite puissance continue.

Par exemple, le groupe de moteurs comporte un premier nombre de moteurs thermiques égal à deux. Lorsque les deux moteurs thermiques développent chacun la puissance continue, le premier nombre de moteurs thermiques développe au total une puissance dite « puissance optimale », égale au double de la puissance continue selon cet exemple.

Un deuxième nombre de moteurs thermiques inférieur au premier nombre d'une unité développe conjointement une puissance dite « puissance seuil » en développant chacun ladite puissance continue.

Ainsi, pour un groupe de moteurs muni d'un premier nombre de moteurs thermiques égal à deux, le deuxième nombre est égal au premier nombre moins une unité, soit à un. La puissance seuil est alors de fait égale à la puissance continue selon cet exemple.

En outre, l'organe électrique peut au maximum développer une puissance dite « puissance maximale » en mode moteur.

De plus, lorsque la condition principale est vérifiée, l'unité de traitement exécute des instructions mémorisées pour faire fonctionner l'organe électrique en mode moteur si cette unité de traitement évalue que la condition principale est vérifiée en sollicitant conjointement en mode moteur l'organe électrique et le deuxième nombre de moteurs thermiques, l'organe électrique fonctionnant temporairement en mode générateur électrique quand le moyen de stockage est déchargé.

Il est à noter que l'on entend par « mettre au repos un moteur thermique », une opération tendant soit à arrêter ce moteur thermique soit à faire fonctionner ce moteur thermique à un régime de ralenti durant lequel l'autonomie du moteur thermique est conservée alors que la consommation en carburant de ce moteur thermique est minimisée.

Ainsi, la mise au repos d'un moteur thermique est généralement proscrite en vol selon l'état de la technique, hors cas de panne dudit moteur thermique notamment ou en dehors d'un vol d'entraînement, car les autres moteurs thermiques peuvent s'avérer insuffisants pour assurer la mission.

Or, en couplant la mise au repos d'un moteur thermique avec l'accélération des autres moteurs thermiques et le cas échéant avec l'apport d'une puissance complémentaire générée par l'organe électrique, il devient possible de poursuivre la mission dans des conditions de sécurité acceptables.

L'aéronef de type aéronef à voilure tournante par exemple peut dès lors fonctionner dans un mode de vol optimisé avec une succession de séquences incluant :

- la mise au repos d'un moteur thermique, avec le cas échéant le déclenchement de l'organe électrique pour compenser le défaut de puissance du ou des moteurs thermiques n'étant pas mis au repos jusqu'à un certain niveau de décharge du moyen de stockage,

- le basculement de l'organe électrique d'un mode moteur électrique vers un mode générateur électrique pour recharger électriquement le moyen de stockage, le moteur thermique mis au repos pouvant être réengagé lors de cette phase.

Il est à noter qu'à chaque séquence on peut déterminer le moteur thermique à mettre au repos en appliquant un cycle prédéterminé, afin que deux moteurs thermiques distincts cumulent des durées de mise au repos et des nombres de remises en route similaires. Ainsi, le procédé n'induit pas une dissymétrie dans l'utilisation et donc la détérioration des moteurs thermiques.

Ce mode de fonctionnement permet d'améliorer le rendement global de la chaîne de transmission de puissance.

En particulier, ce mode de fonctionnement permet au moteur électrique d'apporter à l'aéronef le complément de puissance nécessaire pour maintenir cet aéronef à une vitesse à rendement énergétique optimal, voir amélioré. En effet, il devient possible :

- de faire fonctionner les moteurs thermiques non mis au repos à leur point de rendement le plus favorable,

- d'effectuer un vol à une troisième vitesse Vhy correspondant à la vitesse maximale pouvant être atteinte avec un moteur thermique au repos et un organe électrique fonctionnant en mode moteur en ne dégradant pas ou en améliorant la performance énergétique de l'hélicoptère.

En particulier, en fonction du dimensionnement de l'organe électrique, on peut obtenir :

- un premier niveau d'hybridation qui permet d'atteindre une troisième vitesse Vhy sensiblement identique à la deuxième vitesse Vbr atteignable en utilisant uniquement l'ensemble des moteurs thermiques, mais avec un gain de consommation kilométrique et horaire, la troisième vitesse Vhy pouvant être déterminée de sorte à induire une consommation kilométrique équivalente à la consommation kilométrique minimale obtenue en fonctionnement thermique pur avec un moteur thermique au repos,

- un deuxième niveau d'hybridation qui permet d'atteindre une troisième vitesse Vhy égale à la deuxième vitesse Vbr, en accroissant le gain de consommation kilométrique à iso consommation horaire par rapport au premier niveau d'hybridation,

- un troisième niveau d'hybridation qui permet d'atteindre une troisième vitesse Vhy supérieure à la deuxième vitesse Vbr, ce troisième niveau d'hybridation permettant d'augmenter la vitesse de l'hélicoptère au-delà de la deuxième vitesse Vbr «classique» à iso-consommation horaire par rapport au deuxième niveau d'hybridation, donc en réduisant la consommation kilométrique.

Par suite, lors du dimensionnement de l'aéronef, un constructeur détermine la troisième vitesse Vhy puis dimensionne l'organe électrique et le moyen de stockage en conséquence. Le choix de la troisième vitesse Vhy peut dépendre ensuite d'un compromis entre :

- le gain de consommation apporté par l'augmentation de la vitesse de vol avec un moteur thermique au ralenti,

- la masse embarquée nécessaire au système d'hybridation incluant la masse de l'organe électrique et du moyen de stockage notamment.

- l'adaptation des vitesses caractéristiques de l'aéronef aux besoins de l'opérateur.

Ce procédé peut de plus présenter une ou plusieurs des caractéristiques qui suivent.

Par exemple l'unité de traitement évalue si l'aéronef se trouve dans une première configuration selon laquelle la puissance requise est inférieure ou égale à la puissance seuil ou dans une deuxième configuration selon laquelle la puissance requise est supérieure à la puissance seuil mais inférieure ou égale à une somme de la puissance maximale et de la puissance seuil ou dans une troisième configuration selon laquelle la puissance requise est supérieure à une somme de la puissance maximale et de la puissance seuil. La condition principale est alors vérifiée si :

- une première condition secondaire, selon laquelle la puissance requise développée par le groupe de moteurs est inférieure ou égale à ladite somme de la puissance maximale et de la puissance seuil, est vérifiée conformément auxdites première et deuxième configurations, et si

- lorsque la puissance requise est supérieure à la puissance seuil, si une deuxième condition secondaire selon laquelle le moyen de stockage contient une charge électrique supérieure à un seuil minimal est vérifiée.

Par suite, on met au repos notamment un moteur thermique soit si la première condition est vérifiée et si le moyen de stockage est chargé, ou soit si la première condition est vérifiée et si la puissance requise est supérieure à la puissance seuil indépendamment du niveau de charge du moyen de stockage.

Selon un autre aspect, chaque moteur thermique non mis au repos peut développer la même puissance afin d'optimiser l'endommagement des moteurs thermiques.

En outre, si la puissance requise est inférieure ou égale à la puissance seuil et lorsque ladite condition principale est vérifiée, on applique une stratégie à choisir dans une liste incluant au moins une des stratégies suivantes.

Selon une première stratégie a) relative à un premier mode de réalisation, durant un mode de fonctionnement « générique », on ne sollicite pas l'organe électrique, chaque moteur thermique non mis au repos étant accéléré pour fournir individuellement une puissance égale à la puissance requise divisée par le deuxième nombre soit :

$$W_{ENGi} = W_{nec}/(n-1)$$

où «$W_{ENGi}$» représente la puissance développée par chaque moteur thermique non mis au repos, «$W_{nec}$» représente la puissance requise, « / » représente le signe de la division, et « n-1 » représente le deuxième nombre, « n » représentant le premier nombre.

Selon une deuxième stratégie b) relative à un deuxième mode de réalisation, durant un mode de fonctionnement « endurance » visant à optimiser la durée du vol, on fait fonctionner l'organe électrique en mode moteur à la puissance maximale, chaque moteur thermique non mis au repos développant individuellement une puissance égale à la différence de la puissance requise et de la puissance maximale divisée par le deuxième nombre soit :

$$W_{ENGi} = (W_{nec} - W_{elec\_max})/(n-1)$$

où «$W_{ENGi}$» représente la puissance développée par chaque moteur thermique non mis au repos, «$W_{nec}$» représente la puissance requise, «$W_{elec\_max}$» représente la puissance maximale, « / » représente le signe de la division, et « n-1 » représente le deuxième nombre, « n » représentant le premier nombre.

Selon une troisième stratégie c) relative à un troisième mode de réalisation, durant un mode de fonctionnement « distance » visant à optimiser la distance pouvant être parcourue en vol, chaque moteur thermique non mis au repos développant individuellement une puissance égale à la différence de la puissance requise et de la puissance électrique générée par l'organe électrique divisée par le deuxième nombre soit :

$$W_{ENGi} = (W_{nec} - Welec)/(n-1)$$

où «$W_{ENGi}$» représente la puissance développée par chaque moteur thermique non mis au repos, «$W_{nec}$» représente la puissance requise, «Welec» représente la puissance électrique, « / » représente le signe de la division, et « n-1 » représente le deuxième nombre, « n » représentant le premier nombre.

Dès lors, on fait fonctionner cet organe électrique en mode moteur à une puissance électrique égale au minimum entre d'une part le produit de la puissance requise et d'un terme correctif conformément à la relation suivante et d'autre part ladite puissance maximale soit :

$$Welec = min\ [W_{nec}.(1-Ck_{cible}/Ck_{n-1})\ ;\ W_{elec\_max}]$$

où « Welec» représente la puissance développée par l'organe électrique, «$W_{nec}$» représente la puissance requise, « $1-Ck_{cible}/Ck_{n-1}$ » représente ledit terme correctif, «$Ck_{cible}$» représente une consommation de carburant kilométrique cible prédéterminée, «$Ck_{n-1}$» représente une consommation de carburant kilométrique correspondant à la consommation kilométrique obtenue avec un moteur thermique au repos et les moteurs thermiques non mis au repos fournissant la puissance requise lorsque la puissance requise est inférieure à la puissance seuil ou la puissance seuil lorsque la puissance requise est supérieure ou égale à la puissance seuil, «$W_{elec\_max}$» représente la puissance maximale, « min » représente le minimum entre les deux expressions comprises dans les crochets et séparées par un point virgule.

Par ailleurs, et indépendamment du mode de réalisation, dans la première configuration, lorsque la première condition est vérifiée alors que la deuxième condition secondaire n'est pas vérifiée, l'unité de traitement exécute des instructions mémorisées pour requérir le fonctionnement de l'organe électrique en mode générateur électrique afin de recharger électriquement le moyen de stockage d'énergie électrique.

Ainsi, lorsque la puissance requise est égale à la puissance seuil, on recharge électriquement le moyen de stockage en mettant en oeuvre tous les moteurs thermiques, chaque moteur thermique développant une puissance égale à la somme de la puissance requise et d'une puissance de charge divisée par le premier nombre soit :

$$W_{ENGi} = (W_{nec} + W_{charge})/(n)$$

où «$W_{ENGi}$» représente la puissance développée par chaque moteur thermique non mis au repos, «$W_{nec}$» représente la puissance requise, «$W_{charge}$» représente la puissance de charge, « / » représente le signe de la division, et « n » représente le premier nombre.

De plus, la puissance de charge est égale au minimum entre la différence entre d'une part une puissance optimale développée par le premier nombre de moteurs thermiques fonctionnant chacun à la puissance continue et la puissance requise, et d'autre part la puissance maximale soit:

$$W_{charge} = min\ [PMC_n - W_{nec}\ ;\ W_{elec\_max}]$$

où « $W_{charge}$» représente la puissance de charge, «$W_{nec}$» représente la puissance requise, «$PMC_n$» représente la puissance optimale, «$W_{elec\_max}$» représente la puissance maximale, « min » représente le minimum entre les deux expressions comprises dans les crochets et séparées par un point virgule.

Par contre, lorsque la puissance requise est inférieure à la puissance seuil, on recharge électriquement le moyen de stockage en mettant au repos un moteur thermique et en sollicitant un deuxième nombre de moteurs thermiques, chaque moteur thermique non mis au repos développant une puissance égale à la somme de la puissance requise et d'une puissance de charge divisée par le deuxième nombre soit :

$$W_{ENGi} = (W_{nec} + W_{charge})/(n-1)$$

où «$W_{ENGi}$» représente la puissance développée par chaque moteur thermique non mis au repos, «$W_{nec}$» représente la puissance requise, «$W_{charge}$» représente la puissance de charge, « / » représente le signe de la division, et « n-1 » représente le deuxième nombre, « n » représentant le premier nombre.

Dès lors, la puissance de charge est égale au minimum entre d'une part la différence entre la puissance seuil développée par le deuxième nombre de moteurs thermiques non mis au repos fonctionnant chacun à la puissance continue et la puissance requise, et d'autre part la puissance maximale soit:

$$W_{charge} = min\ [PMC_{n-1} - W_{nec}\ ;\ W_{elec\_max}]$$

où « $W_{charge}$ » représente la puissance de charge, «$W_{nec}$» représente la puissance requise, «$PMC_{n-1}$» représente la puissance seuil, «$W_{elec\_max}$» représente la puissance maximale, « min » représente le minimum entre les deux expressions comprises dans les crochets et séparées par un point virgule.

Selon la deuxième configuration, si la puissance requise est supérieure à la puissance seuil mais inférieure ou égale à la somme de la puissance maximale et de la puissance seuil, lorsque ladite condition principale est vérifiée on applique une option à choisir dans une liste incluant au moins une des options suivantes en fonction du mode de réalisation.

Selon une première option a') relative au premier et au deuxième mode de réalisation, chaque moteur thermique non mis au repos est accéléré pour développer individuellement la puissance continue, le moteur électrique étant sollicité en mode moteur pour fournir une puissance égale à la différence entre la puissance requise et une puissance thermique, ladite puissance thermique étant égale à la puissance développée conjointement par lesdits moteurs thermiques non mis au repos.

Selon une deuxième option b') relative au troisième mode de réalisation, le moteur électrique étant sollicité en mode moteur pour fournir une puissance électrique, chaque moteur thermique non mis au repos est accéléré pour fournir individuellement une puissance égale à la puissance requise moins la puissance électrique divisée par le deuxième nombre, la puissance électrique étant égale au minimum entre d'une part le produit de la puissance requise et d'un terme correctif conformément à la relation suivante, et d'autre part ladite puissance maximale soit :

$$Welec = min\ [W_{nec} \cdot (1 - Ck_{cible}/Ck_{n-1})\ ;\ W_{elec\_max}]$$

où « Welec» représente la puissance développée par l'organe électrique, «$W_{nec}$» représente la puissance requise, « 1-$Ck_{cible}/Ck_{n-1}$» représente ledit terme correctif, «$Ck_{cible}$» représente une consommation de carburant kilométrique cible prédéterminée, «$Ck_{n-1}$» représente une consommation de carburant kilométrique correspondant à la consommation kilométrique obtenue avec un moteur thermique au repos et les moteurs thermiques non mis au repos fournissant la puissance requise lorsque la puissance requise est inférieure à la puissance seuil ou la puissance seuil lorsque la puissance requise est supérieure ou égale à la puissance seuil, «$W_{elec\_max}$» représente la puissance maximale, « min » représente le minimum entre les deux expressions comprises dans les crochets et séparées par un point virgule.

Par contre, indépendamment du mode de réalisation, lorsque le moyen de stockage contient une charge électrique inférieure à un seuil minimal, on recharge électriquement le moyen de stockage en mettant en oeuvre tous les moteurs thermiques, chaque moteur thermique développant une puissance égale à la somme de la puissance requise et d'une puissance de charge divisée par le premier nombre soit :

$$W_{ENGi} = (W_{nec} + W_{charge})/(n)$$

où «$W_{ENGi}$» représente la puissance développée par chaque moteur thermique non mis au repos, «$W_{nec}$» représente la puissance requise, «$W_{charge}$» représente la puissance de charge, « / » représente le signe de la division, et « n » représente le premier nombre.

La puissance de charge est alors égale au minimum entre d'une part la différence entre une puissance optimale développée par le premier nombre de moteurs thermiques fonctionnant chacun à la puissance continue et la puissance requise, et d'autre part la puissance maximale soit :

$$W_{charge} = min\ [PMC_n - W_{nec}\ ;\ W_{elec\_max}]$$

où « $W_{charge}$» représente la puissance de charge, «$W_{nec}$» représente la puissance requise, «$PMC_n$» représente la puissance optimale, «$W_{elec\_max}$» représente la puissance maximale, « min » représente le minimum entre les deux expressions comprises dans les crochets et séparées par un point virgule.

Selon la troisième configuration, si la puissance requise est supérieure à la somme de la puissance maximale et de la puissance seuil, on peut évaluer une exigence selon laquelle la puissance requise est inférieure à la puissance optimale développée par le premier nombre de moteurs thermiques fonctionnant chacun à la puissance continue.

Par exemple, lorsque cette exigence est vérifiée, ou lorsque cette exigence n'est pas vérifiée alors que le moyen de stockage comporte une charge électrique supérieure à un seuil minimal, on n'utilise pas l'organe électrique, chaque moteur thermique étant contrôlé pour développer une puissance égale au quotient de la puissance requise par le premier nombre.

Par contre, lorsque ladite exigence n'est pas vérifiée alors que ledit moyen de stockage comporte une charge électrique inférieure ou égale à un seuil minimal, on utilise ledit organe électrique en mode générateur électrique, chaque moteur thermique développant une puissance égale à la somme de la puissance requise et d'une puissance de charge divisée par le premier nombre soit :

$$W_{ENGi} = (W_{nec} + W_{charge})/(n)$$

où «$W_{ENGi}$» représente la puissance développée par chaque moteur thermique non mis au repos, «$W_{nec}$» représente la puissance requise, «$W_{charge}$» représente la puissance de charge, « / » représente le signe de la division, et « n » représente le premier nombre.

La puissance de charge est alors égale au minimum entre la différence entre d'une part une puissance optimale développée par le premier nombre de moteurs thermiques fonctionnant chacun à la puissance continue et la puissance requise, et d'autre part la puissance maximale soit:

$$W_{charge} = min\ [PMC_n - W_{nec}\ ;\ W_{elec\_max}]$$

où « $W_{charge}$» représente la puissance de charge, «$W_{nec}$» représente la puissance requise, «$PMC_n$» représente la puissance optimale développée par l'ensemble des moteurs thermiques fonctionnant à la première puissance,

«$W_{elec\_max}$» représente la puissance maximale, « min » représente le minimum entre les deux expressions comprises dans les crochets et séparées par un point virgule.

Selon un autre aspect, aucun moteur thermique n'est éventuellement mis au repos durant un vol stationnaire, par sécurité.

Outre un procédé, l'invention vise un aéronef muni d'un groupe de moteurs développant une puissance requise pour entraîner un rotor, ce groupe de moteurs étant muni d'au moins un organe électrique relié à un moyen de stockage électrique et d'un premier nombre de moteurs thermiques supérieur ou égal à deux, ledit organe électrique pouvant développer une puissance maximale en mode moteur.

Cet aéronef est notamment remarquable en ce qu'il comporte une unité de traitement reliée aux moteurs thermiques et à l'organe électrique, l'unité de traitement étant reliée à un moyen de détermination de ladite puissance requise, l'unité de traitement exécutant des instructions mémorisées pour mettre en oeuvre le procédé décrit précédemment.

Cet aéronef peut éventuellement comporter au moins un équipement à choisir dans une sélection comprenant au moins :

- un moyen de sélection d'une stratégie appliquée si la puissance requise est inférieure ou égale à la puissance seuil, et lorsqu'une condition principale selon laquelle le groupe de moteurs peut développer la puissance requise en mettant au repos un moteur thermique est vérifiée,

- un moyen de sélection d'une option appliquée si la puissance requise est supérieure à la puissance seuil mais inférieure ou égale à la somme de la puissance maximale et de la puissance seuil, et si ladite condition principale est vérifiée,

- un moyen de sélection tactique pour déterminer d'une part une stratégie à appliquer si la puissance requise est inférieure ou égale à la puissance seuil, et lorsqu'une condition principale selon laquelle le groupe de moteurs peut développer la puissance requise en mettant au repos un moteur thermique est vérifiée, et d'autre part une option à appliquer si la puissance requise est supérieure à la puissance seuil mais inférieure ou égale à la somme de la puissance maximale et de la puissance seuil et si ladite condition principale est vérifiée.

- un moyen de neutralisation de la mise au repos d'un moteur thermique, ce moyen de neutralisation pouvant empêcher l'application du procédé de contrôle décrit et pouvant induire l'accélération des moteurs thermiques vers un régime de puissance de ces moteurs thermiques suite à l'application dudit procédé.

Par suite, le moyen de sélection d'une stratégie permet à un pilote d'appliquer une première stratégie associée à un mode de réalisation « générique », une deuxième stratégie associée à un mode de réalisation privilégiant l'endurance de l'aéronef ou une troisième stratégie associée à un mode de réalisation privilégiant la distance pouvant être parcourue lorsque l'aéronef se trouve dans la première configuration précitée.

De même, le moyen de sélection d'une stratégie permet à un pilote d'appliquer une première option associée à un mode de réalisation « générique » mais aussi à un mode de réalisation privilégiant l'endurance de l'aéronef, ou une deuxième option associée à un mode de réalisation privilégiant la distance pouvant être parcourue lorsque l'aéronef se trouve dans la deuxième configuration précitée.

En mettant en oeuvre deux moyens de sélection, il est possible de privilégier des modes de réalisation distincts en fonction de la configuration dans laquelle se trouve l'aéronef.

Selon une variante préférée, le moyen de sélection d'une stratégie et le moyen de sélection d'une option sont inclus dans un unique moyen de sélection tactique.

Ce moyen de sélection tactique peut comporter une position correspondant au mode de réalisation « générique », une position correspondant au mode de réalisation privilégiant l'endurance de l'aéronef et une position correspondant au mode de réalisation privilégiant la distance pouvant être parcourue lorsque l'aéronef se trouve dans la deuxième configuration précitée.

En fonction de la configuration dans laquelle évolue l'aéronef, l'unité de traitement met en oeuvre la stratégie ou l'option adéquate.

L'invention et ses avantages apparaîtront avec plus de détails dans le cadre de la description qui suit avec des exemples de réalisation donnés à titre illustratif en référence aux figures annexées qui représentent :

- la figure 1, un aéronef selon l'invention,

- la figure 2, un schéma explicitant le procédé selon l'invention ,

- la figure 3, un schéma présentant les configurations de vol possibles,

- les figures 4 à 6, des schémas explicitant trois modes de réalisation.

Les éléments présents dans plusieurs figures distinctes sont affectés d'une seule et même référence.

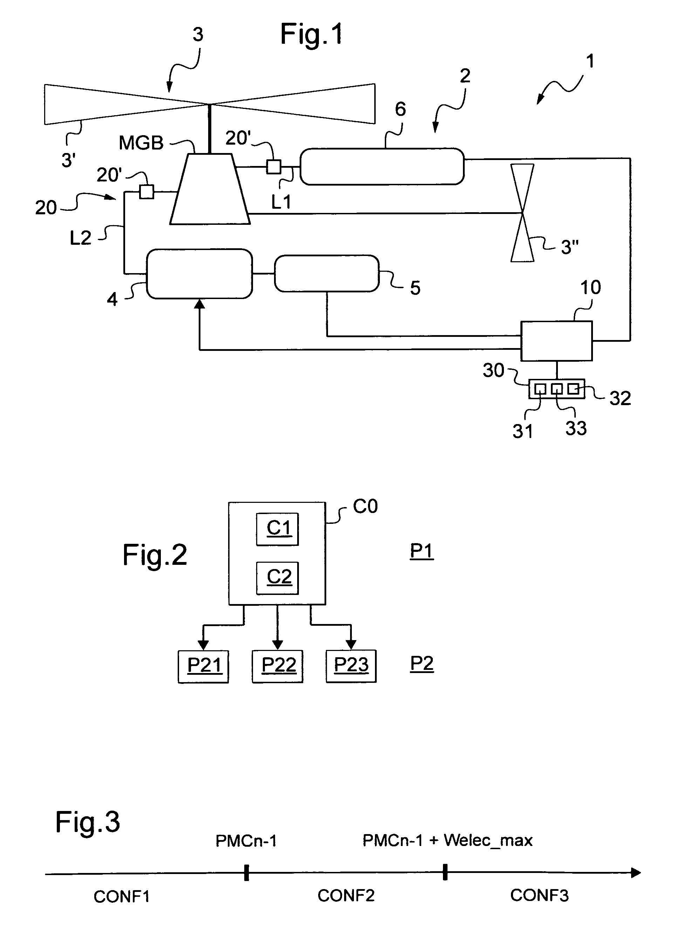

La figure 1 présente un aéronef 1 pourvu d'au moins un rotor 3 participant à la propulsion et/ ou à la sustentation voire au contrôle de l'aéronef 1. L'aéronef 1 est par exemple un aéronef muni d'une voilure tournante 3' et d'un rotor arrière 3" de contrôle en lacet.

Par ailleurs, l'aéronef 1 est muni d'un groupe 2 de moteurs entraînant une boîte de transmission principale de puissance MGB, cette boîte de transmission principale de puissance MGB mettant en rotation les rotors 3.

Ce groupe 2 de moteurs est équipé d'une pluralité de moteurs thermiques 6, de type moteur à pistons ou turbomoteur éventuellement. Plus précisément, le groupe 2 de moteurs comporte un premier nombre n de moteurs thermiques 6 supérieur ou égal à deux.

Chaque moteur thermique est défini pour fonctionner au moins selon un régime continu durant lequel le moteur thermique développe une puissance continue sans limitation de durée, telle que la puissance maximale continue PMC. De plus, chaque moteur thermique est par exemple défini pour fonctionner selon un régime de ralenti.

Lorsque chaque moteur thermique développe la puissance continue PMC, le premier nombre n de moteurs thermiques

développe conjointement une puissance dite puissance optimale $PMC_n$.

Par contre, si un moteur thermique est au repos à savoir à l'arrêt ou au ralenti, le groupe 2 de moteurs thermiques utilise uniquement un deuxième nombre n-1 de moteurs thermiques 6 non mis au repos pour entraîner les rotors 3, le deuxième nombre n-1 étant égal au premier nombre n moins une unité. Dès lors, lorsque chaque moteur thermique non mis au repos développe la puissance continue PMC, on note que le deuxième nombre n-1 de moteurs thermiques non mis au repos développe conjointement une puissance dite puissance seuil $PMC_{n-1}$.

De plus, le groupe 2 de moteurs comprend un organe électrique 4 relié à un moyen de stockage 5 électrique. Cet organe électrique 4 est agencé en parallèle des moteurs thermiques 6, les moteurs thermiques 6 et l'organe électrique 4 étant reliés à la boîte de transmission principale de puissance MGB respectivement par des première et deuxième chaînes mécaniques L1, L2 distinctes.

Cet organe électrique 4 peut fonctionner en mode moteur électrique pour participer à l'entraînement de la boîte de transmission principale de puissance MGB en étant alimenté électriquement par le moyen de stockage 5. L'organe électrique développe alors au maximum une puissance électrique dite puissance maximale $W_{elec\_max}$.

Cet organe électrique 4 peut aussi fonctionner en mode générateur de courant électrique en étant entraîné par la boîte de transmission principale de puissance MGB pour alimenter électriquement le moyen de stockage 5.

Par ailleurs, l'aéronef 1 comporte un dispositif de contrôle du groupe 2 de moteurs. Ce dispositif inclut une unité de traitement 10 pour contrôler le fonctionnement du groupe 2 de moteurs, au travers d'un mode de gestion du groupe 2 de moteurs visant à optimiser le fonctionnement de ce groupe 2 par la mise au repos d'un moteur thermique 6.

Cette unité de traitement 10 est alors reliée aux moteurs thermiques 6 et à l'organe électrique 4 pour contrôler leur fonctionnement, l'unité de traitement étant reliée au moyen de stockage 5 afin de déterminer son niveau de charge électrique.

A cet effet, l'unité de traitement est par ailleurs reliée à un moyen de détermination 20 usuel de la puissance requise $W_{nec}$, ce moyen de détermination pouvant comporter des moyens de mesure 20' d'un couple d'efforts, ces moyens de mesure 20' étant agencés entre chaque moteur du groupe 2 de moteurs et la boîte de transmission principale de puissance MGB.

On note que le dispositif de contrôle peut de plus comprendre au moins un équipement 30 optionnel à choisir dans une liste comportant au moins un moyen d'activation/désactivation dudit mode de gestion de type moyen de neutralisation 33 de la mise au repos d'un moteur thermique, au moins un moyen de sélection d'une stratégie 31 et /ou au moins un moyen de sélection d'une option 32 définissant divers modes de réalisation de l'invention.

L'unité de traitement peut alors comprendre un organe de calcul et une mémoire, l'organe de calcul exécutant des instructions mémorisées dans ladite mémoire pour mettre en oeuvre le procédé explicité par les figures 2 à 6.

En référence à la figure 2, durant une phase d'évaluation P1 l'unité de traitement évalue en temps réel une condition principale C0 selon laquelle le groupe 2 de moteurs peut développer la puissance requise $W_{nec}$ nécessaire en mettant au repos un moteur thermique.

En effet, en référence à la figure 3, on peut distinguer trois configurations de vol.

Selon une première configuration CONF1, la puissance requise $W_{nec}$ est inférieure ou égale à la puissance seuil $PMC_{n-1}$.

Selon une deuxième configuration CONF2, la puissance requise $W_{nec}$ est supérieure à la puissance seuil $PMC_{n-1}$ mais inférieure ou égale à une somme de la puissance maximale $W_{elec-max}$ et de la puissance seuil $PMC_{n-1}$.

Enfin, selon une troisième configuration CONF3, la puissance requise $W_{nec}$ est supérieure à la somme de la puissance maximale $W_{elec\_max}$ et de la puissance seuil $PMC_{n-1}$.

L'unité de traitement évalue donc dans quelle configuration se trouve l'aéronef.

Conformément à la figure 2, l'unité de traitement estime que la condition principale C0 est vérifiée si une première condition secondaire C1 et une deuxième condition secondaire C2 sont vérifiées.

Par suite, la première condition secondaire est vérifiée si l'aéronef se trouve dans la première configuration CONF1 ou la deuxième configuration CONF2, soit lorsque la puissance requise $W_{nec}$ est inférieure ou égale à la somme de la puissance maximale $W_{elec\_max}$ et de la puissance seuil $PMC_{n-1}$.

De plus, la deuxième condition secondaire est vérifiée quand le moyen de stockage 5 contient une charge électrique supérieure à un seuil minimal, soit lorsque le moyen de stockage est électriquement chargé.

Dès lors, quand la condition principale est vérifiée, l'unité de traitement 10 met en oeuvre une phase de gestion P2 pour favoriser le fonctionnement de l'aéronef 1 à un rendement énergétique optimisé.

Durant une première étape P21, l'unité de traitement 10 met au repos un moteur thermique 6. La consommation en carburant de ce moteur thermique 6 est alors diminuée.

Durant une deuxième étape P22, l'unité de traitement 10 accélère les moteurs thermiques 6 non mis au repos. Ainsi, un deuxième nombre n-1 de moteurs thermiques 6 du groupe 2 de moteurs est alors utilisé pour l'entraînement des rotors 3. En accélérant ces moteurs thermiques 6, on optimise alors leur rendement énergétique, la consommation spécifique d'un moteur thermique diminuant lorsque la puissance développée par le moteur thermique augmente.

Durant une troisième étape P23, si la condition principale est vérifiée grâce à un apport de puissance provenant de l'organe électrique 4, l'unité de traitement requiert le fonctionnement de cet organe électrique 4 en mode moteur.

On comprend que la deuxième condition secondaire n'est pas nécessaire pour que la condition principale soit vérifiée lorsque ledit apport de puissance n'est pas requis.

En outre, lorsque le moyen de stockage est déchargé, à savoir quand la charge électrique stockée est inférieure à un seuil minimal, l'unité de traitement requiert le fonctionnement de l'organe électrique en mode générateur, éventuellement en requérant le fonctionnement de tous les moteurs thermiques 6.

On note, en outre, que la première étape P21, la deuxième étape P22 et la troisième étape P23 peuvent être réalisées conjointement ou successivement selon un ordre prédéterminé par le constructeur.

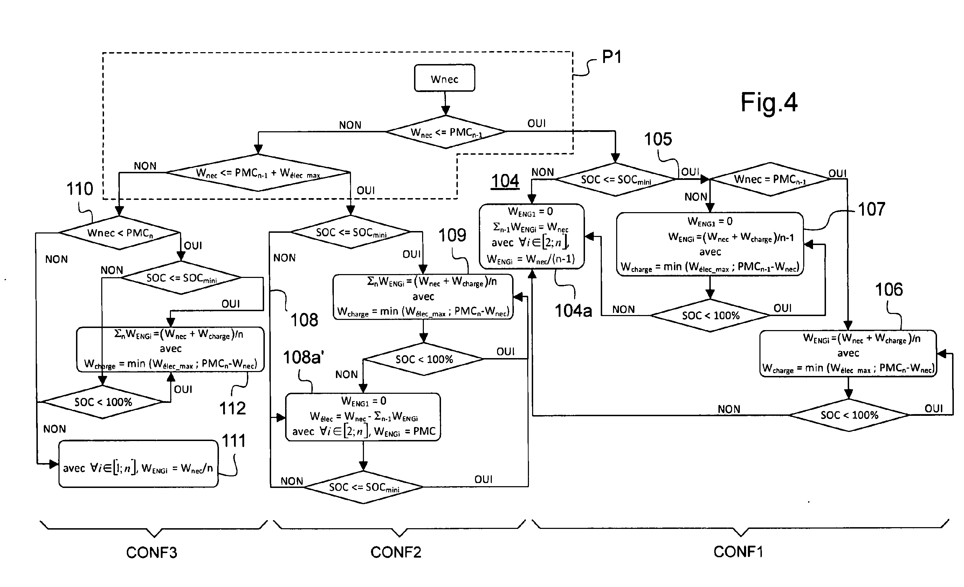

Les figures 4 à 6 présentent des schémas explicitant trois modes de réalisation distincts.

Indépendamment du mode de réalisation, l'unité de traitement détermine dans quelle configuration se trouve l'aéronef 1 durant une phase d'évaluation P1.

Dans la première configuration CONF1, la condition principale est vérifiée indépendamment du niveau de charge du moyen de stockage. De fait, l'unité de traitement va notamment requérir la mise au repos d'un moteur thermique lorsque la première condition secondaire et la deuxième condition secondaire sont remplies.

En effet, si la charge électrique SOC est supérieure à un seuil minimal $SOC_{mini}$, on met en place une stratégie 104 visant à mettre au repos un moteur thermique 6.

On note qu'un moteur thermique au repos est représenté sur les figures 4 à 6 par l'expression « WENG1 = 0 », que ce moteur thermique soit à l'arrêt ou au ralenti dans la mesure où un moteur thermique au repos ne participe pas à l'entraînement des rotors 3.

Selon le mode de réalisation, la stratégie diffère.

En référence à la figure 4, selon une première stratégie 104a, chaque moteur thermique non mis au repos est accéléré pour fournir individuellement une puissance égale à la puissance requise $W_{nec}$ divisée par le deuxième nombre n-1 de moteurs thermiques non mis au repos. La puissance développée par chaque moteur thermique non mis au repos est noté « $W_{ENGi}$ »

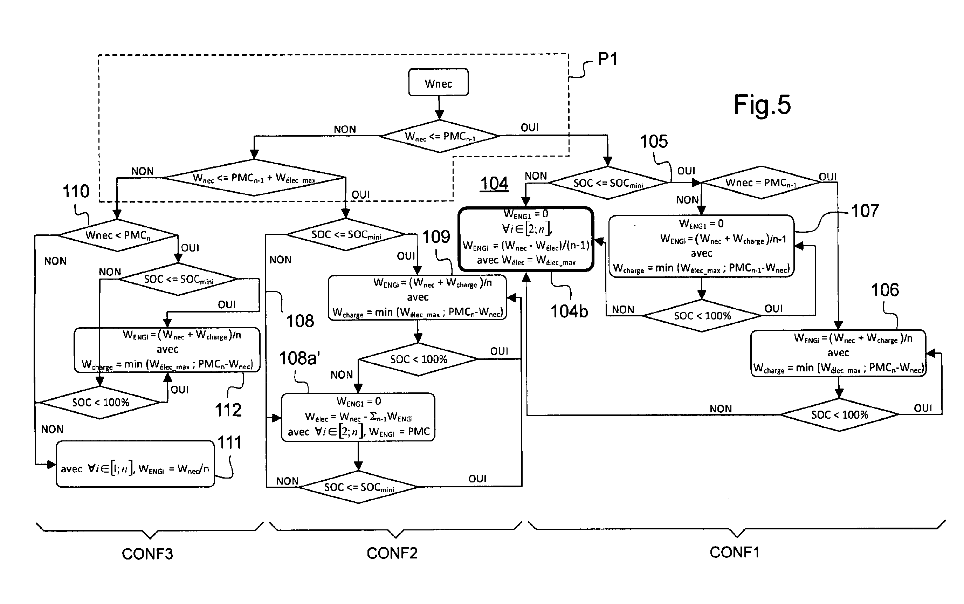

En référence à la figure 5, selon une deuxième stratégie 104b, l'unité de traitement 10 fait fonctionner l'organe électrique 4 en mode moteur à la puissance maximale $W_{elec\_max}$, chaque moteur thermique 6 non mis au repos développant individuellement une puissance égale à la différence de la puissance requise $W_{nec}$ et de la puissance maximale $W_{elec\_max}$ divisée par le deuxième nombre n-1 de moteurs thermiques non mis au repos.

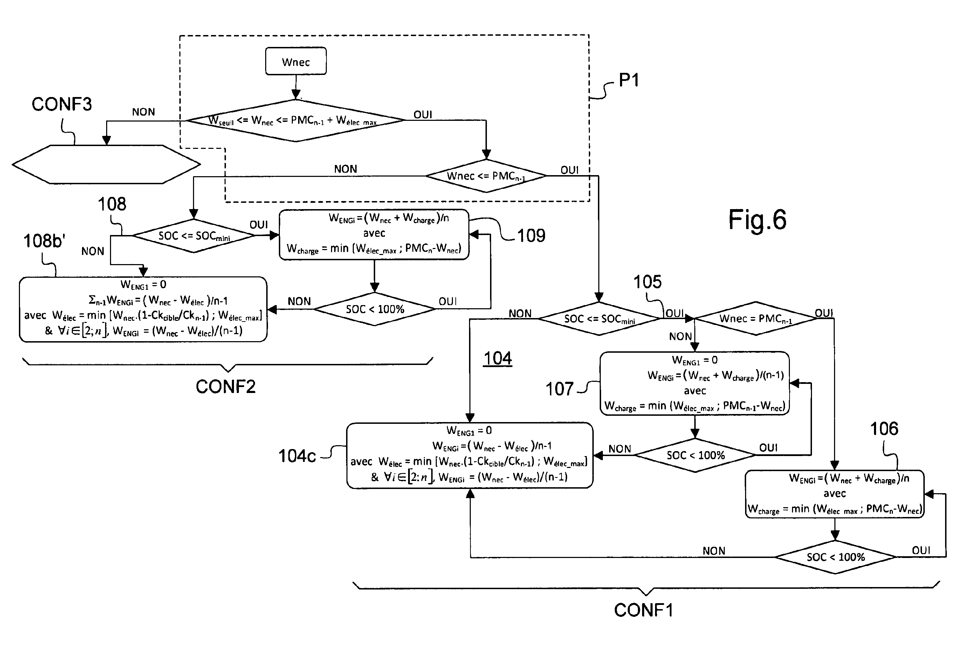

En référence à la figure 6, selon une troisième stratégie 104c, l'unité de traitement 10 fait fonctionner chaque moteur thermique non mis au repos a une puissance égale à la différence de la puissance requise $W_{nec}$ et de la puissance électrique $W_{elec}$ générée par l'organe électrique divisée par le deuxième nombre n-1 de moteurs thermiques non mis au repos.

De plus, l'unité de traitement requiert le fonctionnement de l'organe électrique en mode moteur à une puissance électrique $W_{elec}$ égale au produit de la puissance requise et d'un terme correctif conformément à la relation suivante, ce produit étant borné par une borne inférieure égale à ladite puissance maximale soit :

$$W_{elec} = \min [W_{nec} \cdot (1 - Ck_{cible}/Ck_{n-1}) \; ; \; W_{elec\_max}]$$

où « $W_{elec}$» représente la puissance développée par l'organe électrique, «$W_{nec}$» représente la puissance requise, « 1-$Ck_{cible}$/$Ck_{n-1}$ » représente ledit terme correctif, «$Ck_{cible}$» représente une consommation de carburant kilométrique cible prédéterminée, «$Ck_{n-1}$» représente une consommation de carburant kilométrique correspondant à la consommation kilométrique obtenue avec un moteur thermique au repos et les moteurs thermiques non mis au repos fournissant la puissance requise lorsque la puissance requise est inférieure à la puissance seuil ou la puissance seuil lorsque la puissance requise est supérieure ou égale à la puissance seuil, «$W_{elec\_max}$» représente la puissance maximale, « min » représente le minimum entre les deux expressions comprises dans les crochets et séparées par un point virgule.

On note qu'un pilote peut choisir la stratégie à appliquer à l'aide d'un moyen de sélection d'une stratégie 31, le cas échéant.

Indépendamment du mode de réalisation, en référence à la figure 4, si la charge électrique SOC est inférieure ou égale au seuil minimal $SOC_{mini}$, l'unité de traitement va requérir le chargement du moyen de stockage 5.

En premier lieu, l'unité de traitement 10 détermine si la puissance requise $W_{nec}$ est égale à la puissance seuil $PMC_{n-1}$.

Dans l'affirmative, l'unité de traitement 10 sollicite le fonctionnement de tous les moteurs thermiques 6 durant une première phase de recharge 106 de la première configuration. L'unité de traitement 10 recharge électriquement alors le moyen de stockage 5 en mettant en oeuvre tous les moteurs thermiques, chaque moteur thermique 6 développant une puissance égale à la somme de la puissance requise Wnec et d'une puissance de charge Wcharge divisée par le premier nombre, la puissance de charge Wcharge étant égale à la différence entre la puissance optimale PMCn et la puissance requise Wnec, cette différence étant bornée par une borne inférieure égale à la puissance maximale soit:

$$W_{charge} = min\ [PMC_n\text{-}W_{nec}\ ;\ W_{elec\_max}]$$

où « $W_{charge}$» représente la puissance de charge, «$W_{nec}$» représente la puissance requise, «$PMC_n$» représente la puissance optimale, «$W_{elec\_max}$» représente la puissance maximale, « min » représente le minimum entre les deux expressions comprises dans les crochets et séparées par un point virgule.

Lorsque le moyen de stockage est chargé, l'unité de traitement applique la stratégie 104 adéquate.

Si la puissance requise Wnec est strictement inférieure à la puissance seuil PMCn-1, durant une deuxième phase de recharge 107 de la première configuration, l'unité de traitement 10 recharge électriquement le moyen de stockage 5 en mettant au repos un moteur thermique 6 et en sollicitant le fonctionnement du deuxième nombre n-1 de moteurs thermiques non mis au repos. Chaque moteur thermique non mis au repos développe alors une puissance égale à la somme secondaire de la puissance requise et d'une puissance de charge divisée par le deuxième nombre, la puissance de charge étant égale à la différence entre la puissance seuil développée par le deuxième nombre de moteurs thermiques fonctionnant chacun à la puissance continue et la puissance requise, cette différence étant bornée par une borne inférieure égale à la puissance maximale soit :

$$W_{charge} = min\ [PMC_{n-1}\text{-}W_{nec}\ ;\ W_{elec\_max}]$$

où « $W_{charge}$ » représente la puissance de charge, «$W_{nec}$» représente la puissance requise, «$PMC_{n-1}$» représente la puissance seuil, «$W_{elec\_max}$» représente la puissance maximale, « min » représente le minimum entre les deux expressions comprises dans les crochets et séparées par un point virgule.

Lorsque le moyen de stockage est chargé, l'unité de traitement applique la stratégie 104 adéquate.

Par conséquent, en fonction de la puissance requise, on utilise soit le premier nombre n de moteurs thermiques 6 soit le deuxième nombre n-1 de moteurs thermiques pour entraîner les rotors et recharger électriquement le moyen de stockage, l'organe électrique fonctionnant en mode générateur électrique.

Dans la première configuration CONF1, la condition principale est vérifiée indépendamment du niveau de charge du moyen de stockage. De fait, l'unité de traitement va notamment requérir la mise au repos d'un moteur thermique lorsque la première condition secondaire et la deuxième condition secondaire sont remplies.

Durant la deuxième configuration CONF2, la condition principale est vérifiée lorsque la première condition secondaire et la deuxième condition secondaire sont remplies.

Ainsi, lorsque la charge électrique SOC est supérieure à un seuil minimal $SOC_{mini}$, on met en place une option 108 visant à mettre au repos un moteur thermique 6.

En référence aux figures 4 et 5, selon une première option 108a' mise en oeuvre durant le premier mode de réalisation et le deuxième mode de réalisation, l'unité de traitement 10 accélère chaque moteur thermique non mis au repos pour qu'ils développent tous la puissance continue PMC.

De plus, l'organe électrique est sollicité en mode moteur pour fournir une puissance égale à la différence entre la puissance requise $W_{nec}$ et une puissance thermique $\sum_{n-1} W_{ENGi}$, ladite puissance thermique $\sum_{n-1} W_{ENGi}$ étant égale à la puissance développée conjointement par lesdits moteurs thermiques non mis au repos.

En référence à la figure 6, selon une deuxième option 108b' mise en oeuvre durant le troisième mode de réalisation, l'organe électrique étant sollicité par l'unité de traitement en mode moteur pour fournir une puissance électrique $W_{elec}$, chaque moteur thermique non mis au repos est accéléré pour fournir individuellement une puissance égale à la puissance requise moins la puissance électrique divisée par le deuxième nombre, la puissance électrique étant égale au produit de la puissance requise et d'un terme correctif conformément à la relation suivante, ce produit étant bornée par une borne inférieure égale à ladite puissance maximale soit :

$$W_{elec} = min\ [W_{nec}.(1-Ck_{cible}/Ck_{n-1})\ ;\ W_{elec\_max}]$$

où « $W_{elec}$ » représente la puissance développée par l'organe électrique, « $W_{nec}$ » représente la puissance requise, « $1-Ck_{cible}/Ck_{n-1}$ » représente ledit terme correctif, « $Ck_{cible}$ » représente une consommation de carburant kilométrique cible prédéterminée, « $Ck_{n-1}$ » représente une consommation de carburant kilométrique correspondant à la consommation kilométrique obtenue avec un moteur thermique au repos et les moteurs thermiques non mis au repos fournissant la puissance requise lorsque la puissance requise est inférieure à la puissance seuil ou la puissance seuil lorsque la puissance requise est supérieure ou égale à la puissance seuil, « $W_{elec\_max}$ » représente la puissance maximale, « min » représente le minimum entre les deux expressions comprises dans les crochets et séparées par un point virgule.

Indépendamment de la réalisation, lorsque le moyen de stockage est déchargé, l'unité de traitement met en ouvre une phase de rechargement 109 de la deuxième configuration.

Ainsi, lorsque le moyen de stockage contient une charge électrique inférieure à un seuil minimal, on recharge électriquement le moyen de stockage en mettant en oeuvre tous les moteurs thermiques.

Chaque moteur thermique développe alors une puissance $W_{ENGi}$ égale à la somme de la puissance requise et d'une puissance de charge divisée par le premier nombre, la puissance de charge étant égale à la différence entre une puissance optimale développée par le premier nombre n de moteurs thermiques fonctionnant chacun à la puissance continue et la puissance requise, cette différence étant bornée par une borne inférieure égale à la puissance maximale soit:

$$W_{charge} = min\ [PMC_n-W_{nec}\ ;\ W_{elec\_max}]$$

où « $W_{charge}$ » représente la puissance de charge, « $W_{nec}$ » représente la puissance requise, « $PMC_n$ » représente la puissance optimale, « $W_{elec\_max}$ » représente la puissance maximale, « min » représente le minimum entre les deux expressions comprises dans les crochets et séparées par un point virgule.

En outre, on note que durant la deuxième configuration CONF2, lorsque la première condition secondaire est vérifiée, si la deuxième condition secondaire n'est pas remplie, on met en oeuvre la phase de rechargement 109 de la deuxième configuration.

Dès que le moyen de stockage est chargé, l'unité de traitement applique l'option 108 adéquate. Il est à noter qu'un pilote peut choisir l'option à appliquer à l'aide d'un moyen de sélection d'une option 32 le cas échéant.

Par suite, l'exécution d'un vol peut requérir successivement la mise au repos d'un moteur thermique puis l'utilisation de l'ensemble des moteurs thermiques. L'unité de traitement peut alors déterminer le moteur thermique à mettre au repos en appliquant un cycle prédéterminé défini par le constructeur.

A titre d'exemple, sur un aéronef muni d'un moteur gauche et d'un moteur droit, on met au repos le moteur gauche puis le droit et ainsi de suite.

Durant la troisième configuration CONF3, durant une étape de décision, l'unité de traitement évalue une exigence selon laquelle la puissance requise est inférieure à la puissance optimale développée par le premier nombre de moteurs thermiques fonctionnant chacun à la puissance continue.

Lorsque cette exigence est vérifiée, ou lorsque l'exigence n'est pas vérifiée alors que le moyen de stockage comporte une charge électrique supérieure à un seuil minimal, l'unité de traitement ne sollicité pas l'organe électrique. Durant une étape 111, chaque moteur thermique est alors contrôlé pour développer une puissance égale au quotient de la puissance requise par le premier nombre.

Par contre, lorsque l'exigence n'est pas vérifiée alors que le moyen de stockage comporte une charge électrique inférieure ou égale à un seuil minimal, durant une étape 112, l'unité de traitement 10 utilise l'organe électrique en mode générateur électrique.

Chaque moteur thermique développe une puissance égale à la somme de la puissance requise et d'une puissance de charge divisée par le premier nombre, la puissance de charge étant égale à la différence entre une puissance optimale développée par le premier nombre de moteurs thermiques fonctionnant chacun à la puissance continue et la puissance requise, cette différence étant bornée par une borne inférieure égale à la puissance maximale soit:

$$W_{charge} = \min [PMC_n - W_{nec} ; W_{elec\_max}]$$

où « $W_{charge}$» représente la puissance de charge, «$W_{nec}$» représente la puissance requise, «$PMC_n$» représente la puissance optimale développée par l'ensemble des moteurs thermiques fonctionnant à la première puissance, «$W_{elec\_max}$» représente la puissance maximale, « min » représente le minimum entre les deux expressions comprises dans les crochets et séparées par un point virgule.

Il est à noter qu'un pilote peut éventuellement manoeuvrer un moyen de neutralisation 33 pour ne pas appliquer le procédé selon l'invention.

De même, il est envisageable de neutraliser le procédé automatiquement selon certaines phases de vol, en vol stationnaire par exemple.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Il est en outre possible de dimensionner le moyen de stockage d'énergie et la valeur du seuil minimal $SOC_{mini}$ pour pouvoir bénéficier d'un apport de puissance électrique supplémentaire en cas de perte d'un des moteurs thermiques pour cause de panne. Dans ce cas, il sera possible d'utiliser le moyen de stockage d'énergie en dessous du seuil minimal $SOC_{mini}$, et ce jusqu'à utilisation complète de l'énergie stockée.

## Revendications

1. Procédé de contrôle d'un groupe (2) de moteurs d'un aéronef (1) développant une puissance requise ($W_{nec}$) pour entraîner un rotor (3), ledit groupe (2) de moteurs étant muni d'au moins un organe électrique (4) relié à un moyen de stockage (5) d'énergie électrique et d'un premier nombre (n) de moteurs thermiques (6) supérieur ou égal à deux, chaque moteur thermique (6) pouvant développer une puissance continue (PMC) sans limitation de durée durant un régime continu, ledit organe électrique (4) pouvant développer une puissance maximale ($W_{elec\_max}$) en mode moteur,
**caractérisé en ce qu'**une unité de traitement (10) exécute des instructions mémorisées pour évaluer une condition principale selon laquelle le groupe de moteurs peut développer la puissance requise en mettant au repos un moteur thermique, et lorsque ladite condition principale est vérifiée pour :

   - mettre au repos un moteur thermique, et pour accélérer les moteurs thermiques non mis au repos à savoir pour accélérer un deuxième nombre (n-1) de moteurs thermiques (6) non mis au repos égal audit premier nombre (n) moins une unité afin de développer au maximum une puissance seuil à l'aide des moteurs thermiques, ladite puissance seuil ($PMC_{n-1}$) étant atteinte quand chaque moteur thermique (6) non mis au repos développe ladite puissance continue (PMC), et pour
   - faire fonctionner l'organe électrique en mode moteur si l'unité de traitement évalue que la condition principale est vérifiée en sollicitant conjointement l'organe électrique en mode moteur et le deuxième nombre de moteurs thermiques, l'organe électrique fonctionnant temporairement en mode générateur électrique quand le moyen de stockage est déchargé.

2. Procédé selon la revendication 1,
**caractérisé en ce que** l'unité de traitement évalue si l'aéronef se trouve dans une première configuration (CONF1) selon laquelle la puissance requise est inférieure ou égale à la puissance seuil ou dans une deuxième configuration (CONF2) selon laquelle la puissance requise est supérieure à la puissance seuil mais inférieure ou égale à une somme de la puissance maximale et de la puissance seuil ou dans une troisième configuration (CONF3) selon laquelle la puissance requise est supérieure à une somme de la puissance maximale et de la puissance seuil, ladite condition principale étant vérifiée si :

   - une première condition secondaire selon laquelle la puissance requise développée par le groupe de moteurs est inférieure ou égale à ladite somme de la puissance maximale et de la puissance seuil est vérifiée confor-

EP 2 548 803 B1

mément auxdites première et deuxième configurations, et
- lorsque la puissance requise est supérieure à la puissance seuil, si une deuxième condition secondaire selon laquelle ledit moyen de stockage contient une charge électrique supérieure à un seuil minimal est vérifiée.

3. Procédé selon l'une quelconque des revendications 1 à 2,
**caractérisé en ce que** chaque moteur thermique non mis au repos développe la même puissance.

4. Procédé selon l'une quelconque des revendications 1 à 3,
**caractérisé en ce que** si la puissance requise est inférieure ou égale à la puissance seuil, lorsque ladite condition principale est vérifiée, on applique une stratégie à choisir dans une liste incluant au moins une des stratégies suivantes :

- a) on ne sollicite pas l'organe électrique, chaque moteur thermique non mis au repos étant accéléré pour fournir individuellement une puissance égale à la puissance requise divisée par le deuxième nombre,
- b) on fait fonctionner l'organe électrique en mode moteur à la puissance maximale, chaque moteur thermique non mis au repos développant individuellement une puissance égale à la différence de la puissance requise et de la puissance maximale divisée par le deuxième nombre,
- c) chaque moteur thermique non mis au repos développant individuellement une puissance égale à la différence de la puissance requise et de la puissance électrique générée par l'organe électrique divisée par le deuxième nombre, on fait fonctionner cet organe électrique en mode moteur à une puissance électrique égale au minimum entre le produit de la puissance requise et d'un terme correctif conformément à la relation suivante, et ladite puissance maximale soit :

$$Welec = min [W_{nec.}(1-Ck_{cible}/Ck_{n-1}) ; W_{elec\_max}]$$

où « Welec» représente la puissance développée par l'organe électrique, «$W_{nec}$» représente la puissance requise, « $1-Ck_{cible}/Ck_{n-1}$ » représente ledit terme correctif, «$Ck_{cible}$» représente une consommation de carburant kilométrique cible prédéterminée, «$Ck_{n-1}$» représente une consommation de carburant kilométrique correspondant à la consommation kilométrique obtenue avec un moteur au repos et les moteurs non mis au repos fournissant la puissance requise lorsque la puissance requise est inférieure à la puissance seuil ou la puissance seuil lorsque la puissance requise est supérieure ou égale à la puissance seuil, «$W_{elec\_max}$» représente la puissance maximale, « min » représente le minimum entre les deux expressions comprises dans les crochets et séparées par un point virgule.

5. Procédé selon la revendication 2,
**caractérisé en ce que**, dans la première configuration, lorsque la première condition est vérifiée alors que la deuxième condition secondaire n'est pas vérifiée, l'unité de traitement exécute des instructions mémorisées pour requérir le fonctionnement de l'organe électrique en mode générateur électrique afin de recharger électriquement le moyen de stockage en électricité.

6. Procédé selon la revendication 5,
**caractérisé en ce que**, lorsque la puissance requise est égale à la puissance seuil, on recharge électriquement le moyen de stockage en mettant en oeuvre tous les moteurs thermiques, chaque moteur thermique développant une puissance égale à la somme de la puissance requise et d'une puissance de charge divisée par le premier nombre, la puissance de charge étant égale au minimum entre la puissance maximale et la différence entre une puissance optimale développée par le premier nombre de moteurs thermiques fonctionnant chacun à la puissance continue et la puissance requise, soit:

$$W_{charge} = min [PMC_n-W_{nec} ; W_{elec\_max}]$$

où « $W_{charge}$» représente la puissance de charge, «$W_{nec}$» représente la puissance requise, «$PMC_n$» représente la puissance optimale, «$W_{elec\_max}$» représente la puissance maximale, « min » représente le minimum entre les deux expressions comprises dans les crochets et séparées par un point virgule.

7. Procédé selon l'une quelconque des revendications 1 à 6,

**caractérisé en ce que**, lorsque la puissance requise est inférieure à la puissance seuil, on recharge électriquement le moyen de stockage en mettant au repos un moteur thermique et en sollicitant un deuxième nombre de moteurs thermiques, chaque moteur thermique non mis au repos développant une puissance égale à la somme secondaire de la puissance requise et d'une puissance de charge divisée par le deuxième nombre, la puissance de charge étant égale au minimum entre la puissance maximale et la différence entre la puissance seuil développée par le deuxième nombre de moteurs thermiques fonctionnant chacun à la puissance continue et la puissance requise.

$$W_{charge} = \min [PMC_{n-1} - W_{nec} \ ; \ W_{elec\_max}]$$

où « $W_{charge}$ » représente la puissance de charge, « $W_{nec}$ » représente la puissance requise, « $PMC_{n-1}$ » représente la puissance seuil, « $W_{elec\_max}$ » représente la puissance maximale, « min » représente le minimum entre les deux expressions comprises dans les crochets et séparées par un point virgule.

**8.** Procédé selon l'une quelconque des revendications 1 à 7,
**caractérisé en ce que** si la puissance requise est supérieure à la puissance seuil mais inférieure ou égale à la somme de la puissance maximale et de la puissance seuil, lorsque ladite condition principale est vérifiée, on applique une option à choisir dans une liste incluant au moins une des options suivantes :

- a') chaque moteur thermique non mis au repos est accéléré pour développer individuellement la puissance continue, le moteur électrique étant sollicité en mode moteur pour fournir une puissance égale à la différence entre la puissance requise et une puissance thermique, ladite puissance thermique étant égale à la puissance développée conjointement par lesdits moteurs thermiques n'étant pas mis au repos
- b') le moteur électrique étant sollicité en mode moteur pour fournir une puissance électrique, chaque moteur thermique non mis au repos est accéléré pour fournir individuellement une puissance égale à la puissance requise moins la puissance électrique divisée par le deuxième nombre, la puissance électrique étant égale au minimum entre la puissance maximale et le produit de la puissance requise et d'un terme correctif conformément à la relation suivante, soit:

$$Welec = \min [W_{nec}.(1 - Ck_{cible}/Ck_{n-1}) \ ; \ W_{elec\_max}]$$

où « Welec » représente la puissance développée par l'organe électrique, « $W_{nec}$ » représente la puissance requise, « $1 - Ck_{cible}/Ck_{n-1}$ » représente ledit terme correctif, « $Ck_{cible}$ » représente une consommation de carburant kilométrique cible prédéterminée, « $Ck_{n-1}$ » représente une consommation de carburant kilométrique correspondant à la consommation kilométrique obtenue avec un moteur au repos et les moteurs non mis au repos fournissant la puissance requise lorsque la puissance requise est inférieure à la puissance seuil ou la puissance seuil lorsque la puissance requise est supérieure ou égale à la puissance seuil, « $W_{elec\_max}$ » représente la puissance maximale, « min » représente le minimum entre les deux expressions comprises dans les crochets et séparées par un point virgule.

**9.** Procédé selon la revendication 8,
**caractérisé en ce que** lorsque ledit moyen de stockage contient une charge électrique inférieure à un seuil minimal, on recharge électriquement le moyen de stockage en mettant en oeuvre tous les moteurs thermiques, chaque moteur thermique développant une puissance égale à la somme de la puissance requise et d'une puissance de charge divisée par le premier nombre, la puissance de charge étant égale au minimum entre la puissance maximale et la différence entre une puissance optimale développée par le premier nombre de moteurs thermiques fonctionnant chacun à la puissance continue et la puissance requise, soit :

$$W_{charge} = \min [PMC_n - W_{nec} \ ; \ W_{elec\_max}]$$

où « $W_{charge}$ » représente la puissance de charge, « $W_{nec}$ » représente la puissance requise, « $PMC_n$ » représente la puissance optimale, « $W_{elec\_max}$ » représente la puissance maximale, « min » représente le minimum entre les deux expressions comprises dans les crochets et séparées par un point virgule.

**10.** Procédé selon l'une quelconque des revendications 1 à 9,
**caractérisé en ce que** si la puissance requise est supérieure à la somme de la puissance maximale et de la puissance seuil, on évalue une exigence selon laquelle la puissance requise est inférieure à la puissance optimale développée par le premier nombre de moteurs thermiques fonctionnant chacun à la puissance continue.

**11.** Procédé selon la revendication 10,
**caractérisé en ce que** lorsque ladite exigence est vérifiée, ou lorsque ladite exigence n'est pas vérifiée alors que ledit moyen de stockage comporte une charge électrique supérieure à un seuil minimal, on n'utilise pas ledit organe électrique, chaque moteur thermique étant contrôlé pour développer une puissance égale au quotient de la puissance requise par le premier nombre.

**12.** Procédé selon l'une quelconque des revendications 10 à 11,
**caractérisé en ce que** lorsque ladite exigence n'est pas vérifiée alors que ledit moyen de stockage comporte une charge électrique inférieure ou égale à un seuil minimal, on utilise ledit organe électrique en mode générateur électrique, chaque moteur thermique développant une puissance égale à la somme de la puissance requise et d'une puissance de charge divisée par le premier nombre, la puissance de charge étant égale au minimum entre la puissance maximale et la différence entre une puissance optimale développée par le premier nombre de moteurs thermiques fonctionnant chacun à la puissance continue et la puissance requise, soit :

$$W_{charge} = min \; [PMC_n - W_{nec} \; ; \; W_{elec\_max}]$$

où « $W_{charge}$ » représente la puissance de charge, « $W_{nec}$ » représente la puissance requise, « $PMC_n$ » représente la puissance optimale développée par l'ensemble des moteurs thermiques fonctionnant à la première puissance, « $W_{elec\_max}$ » représente la puissance maximale, « min » représente le minimum entre les deux expressions comprises dans les crochets et séparées par un point virgule.

**13.** Procédé selon l'une quelconque des revendications 10 à 11,
**caractérisé en ce qu'**un vol requérant successivement la mise au repos d'un moteur thermique puis l'utilisation de tous les moteurs thermiques, on détermine le moteur thermique à mettre au repos en appliquant un cycle prédéterminé.

**14.** Procédé selon l'une quelconque des revendications 1 à 13,
**caractérisé en ce qu'**aucun moteur thermique n'est mis au repos durant un vol stationnaire.

**15.** Aéronef (1) muni d'un groupe (2) de moteurs développant une puissance requise pour entraîner un rotor (3), ledit groupe (2) de moteurs étant muni d'au moins un organe électrique (4) relié à un moyen de stockage (5) électrique et d'un premier nombre (n) de moteurs thermiques (6) supérieur ou égal à deux, ledit organe électrique (4) pouvant développer une puissance maximale ($W_{elec\_max}$) en mode moteur,
**caractérisé en ce qu'**il comporte une unité de traitement (10) reliée auxdits moteurs thermiques (6) et audit organe électrique (4), ladite unité de traitement (10) étant reliée à un moyen de détermination (20) de ladite puissance requise, ladite unité de traitement (10) exécutant des instructions mémorisées pour mettre en oeuvre le procédé selon l'une quelconque des revendications 1 à 14.

**16.** Aéronef selon la revendication 15,
**caractérisé en ce qu'**il comporte au moins un équipement (30) à choisir dans une sélection comprenant au moins :

- un moyen de sélection d'une stratégie (31) appliquée si la puissance requise est inférieure ou égale à une puissance seuil, lorsqu'une condition principale selon laquelle le groupe de moteurs peut développer la puissance requise en mettant au repos un moteur thermique est vérifiée,
- un moyen de sélection d'une option (32) appliquée si la puissance requise est supérieure à la puissance seuil mais inférieure ou égale à la somme de la puissance maximale et de la puissance seuil, et si ladite condition principale est vérifiée,
- un moyen de sélection tactique pour déterminer d'une part une stratégie à appliquer si la puissance requise est inférieure ou égale à la puissance seuil, et lorsqu'une condition principale selon laquelle le groupe de moteurs peut développer la puissance requise en mettant au repos un moteur thermique est vérifiée, et d'autre part une option à appliquer si la puissance requise est supérieure à la puissance seuil mais inférieure ou égale à la somme de la puissance maximale et de la puissance seuil et si ladite condition principale est vérifiée,
- un moyen de neutralisation (33) de la mise au repos d'un moteur thermique.

**Patentansprüche**

1. Verfahren zur Kontrolle einer Gruppe (2) von Motoren eines Luftfahrzeugs (1), die eine Leistung ($W_{nec}$) entwickeln, die erforderlich ist, um einen Rotor (3) anzutreiben, wobei die Gruppe (2) von Motoren mit mindestens einem elektrischen Organ (4) versehen sind, das mit einem Mittel (5) zum Speichern elektrischer Energie verbunden ist, und mit einer ersten Anzahl (n) von thermischen Motoren (6), die größer oder gleich zwei ist, wobei jeder thermische Motor (6) eine kontinuierliche Leistung (PMC) ohne Begrenzung der Dauer während eines kontinuierlichen Betriebs entwickeln kann, wobei das elektrische Organ (4) im Motormodus eine maximale Leistung ($W_{elec\_max}$) entwickeln kann,
**dadurch gekennzeichnet, dass** eine Verarbeitungseinheit (10) gespeicherte Befehle ausführt, um eine Hauptbedingung zu berechnen, gemäß der die Gruppe von Motoren die erforderliche Leistung entwickeln kann, indem ein thermischer Motor stillgelegt wird, und wenn die Hauptbedingung bestätigt ist, um:

- einen thermischen Motor stillzulegen und um die nicht stillgelegten thermischen Motoren zu beschleunigen, d.h. um eine zweite Anzahl (n-1) nicht stillgelegter thermischer Motoren (6), die gleich der ersten Anzahl (n) minus einer Einheit ist, zu beschleunigen, um maximal eine Schwellenleistung mit Hilfe der thermischen Motoren zu entwickeln, wobei die Schwellenleistung ($PMC_{n-1}$) erreicht ist, wenn jeder nicht stillgelegte thermische Motor (6) die kontinuierliche Leistung (PMC) entwickelt, und um
- das elektrische Organ im Motormodus in Betrieb zu nehmen, wenn die Verarbeitungseinheit berechnet, dass die Hauptbedingung bestätigt ist, indem das elektrische Organ im Motormodus und die zweite Anzahl thermischer Motoren zusammen in Anspruch genommen werden, wobei das elektrische Organ zeitweise im elektrischen Generatormodus arbeitet, wenn das Speichermittel entladen ist.

2. Verfahren nach Anspruch 1,
**dadurch gekennzeichnet, dass** die Verarbeitungseinheit berechnet, ob das Luftfahrzeug sich in einer ersten Konfiguration (CONF1) befindet, gemäß der die erforderliche Leistung kleiner oder gleich der Schwellenleistung ist, oder in einer zweiten Konfiguration (CONF2), gemäß der die erforderliche Leistung größer als die Schwellenleistung, aber kleiner oder gleich einer Summe aus der maximalen Leistung und der Schwellenleistung ist, oder in einer dritten Konfiguration (CONF3), gemäß der die erforderliche Leistung größer ist als eine Summe aus der maximalen Leistung und der Schwellenleistung, wobei die Hauptbedingung bestätigt ist, wenn:

- in Übereinstimmung mit der ersten und der zweiten Konfiguration eine erste Nebenbedingung bestätigt ist, gemäß der die erforderliche von der Gruppe von Motoren entwickelte Leistung kleiner oder gleich der Summe der maximalen Leistung und der Schwellenleistung ist, und
- die erforderliche Leistung größer als die Schwellenleistung ist, wenn eine zweite Nebenbedingung bestätigt ist, gemäß der das Speichermittel eine elektrische Ladungsmenge enthält, die größer ist als ein minimaler Schwellenwert.

3. Verfahren nach einem der Ansprüche 1 bis 2,
**dadurch gekennzeichnet, dass** jeder thermische Motor, der nicht stillgelegt ist, die gleiche Leistung entwickelt.

4. Verfahren nach einem der Ansprüche 1 bis 3,
**dadurch gekennzeichnet, dass**, wenn die erforderliche Leistung kleiner oder gleich der Schwellenleistung ist, wenn die Hauptbedingung bestätigt ist, eine Strategie angewendet wird, die aus einer Liste zu wählen ist, die mindestens eine der folgenden Strategien umfasst:

- a) das elektrische Organ wird nicht in Anspruch genommen, wobei jeder nicht stillgelegte thermische Motor beschleunigt wird, um einzeln eine Leistung zu liefern, die gleich der erforderlichen Leistung dividiert durch die zweite Anzahl ist,
- b) das elektrische Organ wird im Motormodus mit der maximalen Leistung in Betrieb genommen, wobei jeder nicht stillgelegte thermische Motor einzeln eine Leistung entwickelt, die gleich der Differenz aus der erforderlichen Leistung und der maximalen Leistung dividiert durch die zweite Anzahl ist,
- c) jeder nicht stillgelegte thermische Motor entwickelt einzeln eine Leistung, die gleich der Differenz aus der erforderlichen Leistung und der von dem elektrischen Organ erzeugten elektrischen Leistung dividiert durch die zweite Anzahl ist, wobei das elektrische Organ im Motormodus bei einer elektrischen Leistung in Betrieb genommen wird, die gleich dem Minimum zwischen dem Produkt aus der erforderlichen Leistung und einem Korrekturterm gemäß der folgenden Gleichung ist, und wobei die maximale Leistung

$$\text{Welec} = \min \left[W_{nec}\text{-}\{1\text{-}Ck_{cible}/Ck_{n\text{-}1}\};\ W_{elec\_max}\right]$$

sei, wobei "Welec" die von dem elektrischen Organ entwickelte Leistung, "$W_{nec}$" die erforderliche Leistung, "1-$Ck_{cible}/Ck_{n\text{-}1}$" den Korrekturterm, "$Ck_{cible}$" einen vorbestimmten Zielkraftstoffverbrauch pro Kilometer, "$Ck_{n\text{-}1}$" einen Kraftstoffverbrauch pro Kilometer darstellt, der dem Kraftstoffverbrauch pro Kilometer entspricht, der erhalten wird mit einem stillgelegten Motor und den nicht stillgelegten Motoren, die die erforderliche Leistung liefern, wenn die erforderliche Leistung kleiner ist als die Schwellenleistung, oder die Schwellenleistung, wenn die erforderliche Leistung größer oder gleich der Schwellenleistung ist, "$W_{elec\_max}$" die maximale Leistung, "min" das Minimum der beiden Ausdrücke in Klammern, die durch ein Semikolon getrennt sind, bezeichnen.

**5.** Verfahren nach Anspruch 2,
**dadurch gekennzeichnet, dass** in der ersten Konfiguration, wenn die erste Bedingung bestätigt ist, während die zweite Bedingung nicht bestätigt ist, die Verarbeitungseinheit gespeicherte Befehle ausführt, um den Betrieb des elektrischen Organs im elektrischen Generatormodus anzufordern, um das elektrische Speichermittel elektrisch aufzuladen.

**6.** Verfahren nach Anspruch 5,
**dadurch gekennzeichnet, dass**, wenn die erforderliche Leistung gleich der Schwellenleistung ist, das Speichermittel elektrisch aufgeladen wird, indem alle thermischen Motoren in Betrieb genommen werden, wobei jeder thermische Motor eine Leistung entwickelt, die gleich der Summe der erforderlichen Leistung und einer Aufladeleistung dividiert durch die erste Anzahl ist, wobei die Aufladeleistung gleich dem Minimum von der maximalen Leistung und der Differenz aus einer optimalen, von der ersten Anzahl von thermischen Motoren entwickelten Leistung ist, die jeweils mit der kontinuierlichen Leistung und der erforderlichen Leistung arbeiten,
wobei

$$W_{charge} = \min \left[PMC_n\text{-}W_{nec};\ W_{elec\_max}\right]$$

ist, wobei "$W_{charge}$" die Aufladeleistung, "$W_{nec}$" die erforderliche Leistung, "$PMC_n$" die optimale Leistung, "$W_{elec\_max}$" die maximale Leistung bezeichnen, "min" das Minimum der beiden Ausdrücke in Klammern, die durch ein Semikolon getrennt sind, bezeichnet.

**7.** Verfahren nach einem der Ansprüche 1 bis 6,
**dadurch gekennzeichnet, dass**, wenn die erforderliche Leistung kleiner als die Schwellenleistung ist, das Speichermittel elektrisch aufgeladen wird, indem ein thermischer Motor stillgelegt wird, und eine zweite Anzahl von thermischen Motoren in Anspruch genommen wird, wobei jeder nicht stillgelegte thermische Motor eine Leistung entwickelt, die gleich einer sekundären Summe aus der erforderlichen Leistung und einer Aufladeleistung dividiert durch die zweite Anzahl ist, wobei die Aufladeleistung gleich dem Minimum von der maximalen Leistung und der Differenz zwischen der Schwellenleistung, die von der zweiten Anzahl thermischer Motoren entwickelt wird, ist, die jeweils bei kontinuierlicher Leistung und der erforderlichen Leistung arbeiten:

$$W_{charge} = \min \left[PMC_{n\text{-}1}\text{-}W_{nec};\ W_{elec\_max}\right],$$

wobei "$W_{charge}$" die Aufladeleistung, "$W_{nec}$" die erforderliche Leistung, "$PMC_{n\text{-}1}$" die Schwellenleistung, "$W_{elec\_max}$" die maximale Leistung, "min" das Minimum der beiden Ausdrücke in Kammern, die durch ein Semikolon getrennt sind, bezeichnen.

**8.** Verfahren nach einem der Ansprüche 1 bis 7,
**dadurch gekennzeichnet, dass**, wenn die erforderliche Leistung größer als die Schwellenleistung, aber kleiner oder gleich der Summe aus der maximalen Leistung und der Schwellenleistung ist, wenn die Hauptbedingung bestätigt ist, eine Option angewendet wird, die aus einer Liste zu wählen ist, die mindestens eine der folgenden Optionen umfasst:

- a') jeder nicht stillgelegte thermische Motor wird beschleunigt, um einzeln die kontinuierliche Leistung zu entwickeln, wobei der elektrische Motor im Motormodus in Anspruch genommen wird, um eine Leistung zu liefern, die gleich der Differenz zwischen der erforderlichen Leistung und einer thermischen Leistung ist, wobei die thermische Leistung gleich einer Leistung ist, die von den nicht stillgelegten thermischen Motoren gemeinsam entwickelt wird,
- b') der elektrische Motor wird im Motormodus in Anspruch genommen, um eine elektrische Leistung zu liefern, wobei jeder nicht stillgelegte thermische Motor beschleunigt wird, um einzeln eine Leistung zu liefern, die gleich der erforderlichen Leistung minus der elektrischen Leistung dividiert durch die zweite Anzahl ist, wobei die elektrische Leistung gleich dem Minimum von der maximalen Leistung und dem Produkt der erforderlichen Leistung und einem Korrekturterm gemäß der folgenden Gleichung ist:

$$\text{Welec} = \min\ [W_{nec}\text{-}(1\text{-}Ck_{cible}/Ck_{n\text{-}1});\ W_{elec\_max}],$$

wobei "Welec" die von dem elektrischen Organ entwickelte Leistung, "$W_{nec}$" die erforderliche Leistung, "$1\text{-}Ck_{cible}/Ck_{n\text{-}1}$" den Korrekturterm, "$Ck_{cible}$" einen vorbestimmten Zielkraftstoffverbrauch pro Kilometer, "$Ck_{n\text{-}1}$" einen Kraftstoffverbrauch pro Kilometer darstellt, der dem Kraftstoffverbrauch pro Kilometer entspricht, der erhalten wird mit einem stillgelegten Motor und den nicht stillgelegten Motoren, die die erforderliche Leistung liefern, wenn die erforderliche Leistung kleiner ist als die Schwellenleistung, oder die Schwellenleistung, wenn die erforderliche Leistung größer oder gleich der Schwellenleistung ist, "$W_{elec\_max}$" die maximale Leistung, "min" das Minimum der beiden Ausdrücke in Klammern, die durch ein Semikolon getrennt sind, bezeichnen.

**9.** Verfahren nach Anspruch 8,
**dadurch gekennzeichnet, dass**, wenn das Speichermittel eine elektrische Ladungsmenge enthält, die kleiner ist als ein minimaler Schwellenwert, das Speichermittel elektrisch aufgeladen wird, indem alle thermischen Motoren in Betrieb genommen werden, wobei jeder thermische Motor eine Leistung entwickelt, die gleich der Summe aus der erforderlichen Leistung und einer Aufladeleistung dividiert durch die erste Anzahl ist, wobei die Aufladeleistung gleich dem Minimum aus der maximalen Leistung und der Differenz zwischen einer optimalen Leistung ist, die von der ersten Anzahl thermischer Motoren entwickelt wird, die jeweils mit der kontinuierlichen Leistung und der erforderlichen Leistung arbeiten, wobei:

$$W_{charge} = \min\ [PMC_n\text{-}W_{nec};\ W_{elec\_max}]$$

ist, wobei "$W_{charge}$" die Aufladeleistung, "$W_{nec}$" die erforderliche Leistung, "$PMC_n$" die optimale Leistung, "$W_{elec\_max}$" die maximale Leistung, "min" das Minimum der beiden Ausdrücke in Klammern, die durch ein Semikolon getrennt sind, bezeichnen.

**10.** Verfahren nach einem der Ansprüche 1 bis 9,
**dadurch gekennzeichnet, dass**, wenn die erforderliche Leistung größer ist als die Summe aus der maximalen Leistung und der Schwellenleistung, eine Anforderung bestimmt wird, gemäß der die erforderliche Leistung kleiner ist als die von der ersten Anzahl thermischer Motoren, die jeweils mit kontinuierlicher Leistung arbeiten, entwickelte optimale Leistung.

**11.** Verfahren nach Anspruch 10,
**dadurch gekennzeichnet, dass**, wenn die Anforderung überprüft ist oder wenn die Anforderung nicht überprüft ist, aber das Speichermittel eine Ladungsmenge aufweist, die größer ist als ein minimaler Schwellenwert, das elektrische Organ nicht verwendet wird, wobei jeder thermische Motor so gesteuert wird, dass er eine Leistung entwickelt, die gleich dem Quotienten aus der erforderlichen Leistung und der ersten Anzahl ist.

12. Verfahren nach einem der Ansprüche 10 bis 11,
**dadurch gekennzeichnet, dass**, wenn die erste Anforderung nicht überprüft ist, das Speichermittel jedoch eine elektrische Ladungsmenge aufweist, die kleiner oder gleich einem minimalen Schwellenwert ist, das elektrische Organ im elektrischen Generatormodus verwendet wird, wobei jeder thermische Motor eine Leistung entwickelt, die gleich der Summe aus der erforderlichen Leistung und einer Aufladeleistung dividiert durch die erste Anzahl ist, wobei die Aufladeleistung gleich dem Minimum aus der maximalen Leistung und der Differenz zwischen einer von der ersten Anzahl von thermischen Motoren entwickelten optimalen Leistung ist, wobei die thermischen Motoren jeweils mit kontinuierlicher Leistung und der erforderlichen Leistung arbeiten, wobei

$$W_{charge} = \min\left[PMC_n\text{-}W_{nec};\ W_{elec\_max}\right]$$

ist, wobei "$W_{charge}$" die Aufladeleistung, "$W_{nec}$" die erforderliche Leistung, "$PMC_n$" die optimale Leistung darstellt, die von der Gruppe der thermischen Motoren entwickelt wird, die mit der ersten Leistung arbeiten, "$W_{elec\_max}$" die maximale Leistung bezeichnet und "min" das Minimum der beiden Ausdrücke in Klammern, die durch ein Semikolon getrennt sind, bezeichnet.

13. Verfahren nach einem der Ansprüche 10 bis 11,
**dadurch gekennzeichnet, dass** bei einem Flug, der aufeinanderfolgend das Stilllegen eines thermischen Motors und anschließend die Verwendung aller thermischen Motoren erfordert, der stillzulegende thermische Motor bestimmt wird, indem ein vorbestimmter Zyklus angewendet wird.

14. Verfahren nach einem der Ansprüche 1 bis 13,
**dadurch gekennzeichnet, dass** während eines Schwebeflugs kein thermischer Motor stillgelegt wird.

15. Luftfahrzeug (1) mit einer Gruppe (2) von Motoren, die eine Leistung ($W_{nec}$) entwickeln, die erforderlich ist, um einen Rotor (3) anzutreiben, wobei die Gruppe (2) von Motoren mit mindestens einem elektrischen Organ (4) versehen sind, das mit einem Mittel (5) zum Speichern elektrischer Energie verbunden ist, und mit einer ersten Anzahl (n) von thermischen Motoren (6), die größer oder gleich zwei ist, wobei das elektrische Organ (4) im Motormodus eine maximale Leistung ($W_{elec-max}$) entwickeln kann,
**dadurch gekennzeichnet, dass** es eine Verarbeitungseinheit (10) aufweist, die mit den thermischen Motoren (6) und dem elektrischen Organ (4) verbunden ist, wobei die Verarbeitungseinheit (10) mit einem Mittel (20) zur Bestimmung der erforderlichen Leistung verbunden ist, wobei die Verarbeitungseinheit (10) gespeicherte Befehle ausführt, um das Verfahren nach einem der Ansprüche 1 bis 14 auszuführen.

16. Luftfahrzeug nach Anspruch 15,
**dadurch gekennzeichnet, dass** es mindestens eine Ausrüstung (30) aufweist, die aus einer Auswahl zu wählen ist, die mindestens umfasst:

- ein Mittel (31) zur Auswahl einer Strategie, die angewendet wird, wenn die erforderliche Leistung kleiner oder gleich einer Schwellenleistung ist, wenn eine Hauptbedingung, gemäß der die Gruppe von Motoren die erforderliche Leistung entwickeln kann, indem ein thermischer Motor stillgelegt wird, bestätigt ist,
- ein Mittel (32) zur Auswahl einer Option, die angewendet wird, wenn die erforderliche Leistung größer als die Schwellenleistung ist, jedoch kleiner oder gleich der Summe aus der maximalen Leistung und der Schwellenleistung, und wenn die Hauptbedingung bestätigt ist,
- ein Mittel zur taktischen Auswahl, um einerseits eine anzuwendende Strategie zu bestimmen, wenn die erforderliche Leistung kleiner oder gleich der Schwellenleistung ist, und wenn eine Hauptbedingung, gemäß der die Gruppe von Motoren die erforderliche Leistung entwickeln kann, indem ein thermischer Motor stillgelegt wird, bestätigt ist, und andererseits eine Option zu bestimmen, die anzuwenden ist, wenn die erforderliche Leistung größer als die Schwellenleistung ist, jedoch kleiner oder gleich der Summe aus der maximalen Leistung und der Schwellenleistung ist, und wenn die Hauptbedingung bestätigt ist,
- ein Mittel (33) zur Aufhebung der Stilllegung eines thermischen Motors.

**EP 2 548 803 B1**

**Claims**

1. A method for controlling a group (2) of engines of an aircraft (1) developing a required power ($W_{nec}$) for driving a rotor (3), said group (2) of engines being provided with at least one electrical member (4) connected to a storage means (5) for electrical energy and with a first number (n) of heat engines (6) which is greater than or equal to two, each heat engine (6) being capable of developing a continuous power (PMC) without any limitation on duration during continuous operation, said electrical member (4) being capable of developing a maximum power ($W_{elec\_max}$) in motor mode, **characterised in that** a processing unit (10) executes stored instructions for evaluating a main condition according to which the group of engines can develop the required power while resting one heat engine, and when said main condition is met for:

   - resting one heat engine, and for accelerating the heat engines which are not at rest, namely for accelerating a second number (n-1) of heat engines (6) which are not at rest which is equal to said first number (n) minus one unit in order to develop to the maximum a threshold power using the heat engines, said threshold power ($PMC_{n-1}$) being achieved when each heat engine (6) which is not at rest is developing said continuous power (PMC), and for
   - causing the electrical member to operate in motor mode if the processing unit evaluates that the main condition is met by jointly acting on the electrical member in motor mode and the second number of heat engines, the electrical member operating temporarily in electrical generation mode when the storage means is discharged.

2. A method according to Claim 1,
   **characterised in that** the processing unit evaluates whether the aircraft is in a first configuration (CONF1) in which the required power is less than or equal to the threshold power, or in a second configuration (CONF2) in which the required power is greater than the threshold power but less than or equal to a sum of the maximum power and the threshold power, or in a third configuration (CONF3) in which the required power is greater than a sum of the maximum power and of the threshold power, said main condition being met if:

   - a first secondary condition according to which the required power developed by the group of engines is less than or equal to said sum of the maximum power and of the threshold power is met in accordance with said first and second configurations, and
   - when the required power is greater than the threshold power, if a second secondary condition according to which said storage means contains an electric charge which is greater than a minimum threshold is met.

3. A method according to any one of Claims 1 to 2,
   **characterised in that** each heat engine which is not at rest develops the same power.

4. A method according to any one of Claims 1 to 3,
   **characterised in that** if the required power is less than or equal to the threshold power, when said main condition is met, a strategy is applied which is selected from a list including at least one of the following strategies:

   - a) the electrical member is not acted upon, each heat engine which is not at rest being accelerated in order to supply individually power equal to the required power divided by the second number,
   - b) the electrical member is operated in motor mode at maximum power, each heat engine which is not at rest individually developing power equal to the difference between the required power and the maximum power divided by the second number,
   - c) each heat engine which is not at rest developing individually power equal to the difference between the required power and the electric power generated by the electrical member divided by the second number, this electrical member is operated in motor mode at an electric power equal to the minimum between the product of the required power and of a corrective term in accordance with the following relationship, and said maximum power, namely:

$$\text{Welec} = \min\left[W_{nec} \cdot (1 - Ck_{cible}/Ck_{n-1}) \; ; \; W_{elec\_max}\right]$$

where "Welec" represents the power developed by the electrical member, "$W_{nec}$" represents the required power, "$1 - Ck_{cible}/Ck_{n-1}$" represents said corrective term, "$Ck_{cible}$" represents a predetermined target fuel consumption per kilometre, "$Ck_{n-1}$" represents a fuel consumption per kilometre corresponding to the consumption per kilometre obtained with one engine being at rest and the engines which are not at rest supplying the required power when the required power is less than the threshold power or the threshold power when the required power is greater than or equal to the threshold power, "$W_{elec\_max}$" represents the maximum power, and "min" represents the minimum between the two expressions which are contained in the square brackets and separated by a semi-colon.

5. A method according to Claim 2,
**characterised in that**, in the first configuration, when the first condition is met while the second secondary condition is not met, the processing unit executes stored instructions for requiring the operation of the electrical member in electrical generation mode in order to electrically recharge the electricity storage means.

6. A method according to Claim 5,
**characterised in that**, when the required power is equal to the threshold power, the storage means is electrically recharged by running all the heat engines, each heat engine developing power equal to the sum of the required power and of a charging power divided by the first number, the charging power being equal to the minimum between the maximum power and the difference between an optimum power developed by the first number of heat engines each operating at the continuous power and the required power, namely:

$$W_{charge} = min\ [PMC_n\text{-}W_{nec}\ ;\ W_{elec\_max}]$$

where "$W_{charge}$" represents the charging power, "$W_{nec}$" represents the required power, "$PMC_n$" represents the optimum power, "$W_{elec\_max}$" represents the maximum power, and "min" represents the minimum between the two expressions which are contained in the square brackets and separated by a semi-colon.

7. A method according to any one of Claims 1 to 6,
**characterised in that**, when the required power is less than the threshold power, the storage means is electrically recharged while resting one heat engine and by acting on a second number of heat engines, each heat engine which is not at rest developing power equal to the secondary sum of the required power and of a charging power divided by the second number, the charging power being equal to the minimum between the maximum power and the difference between the threshold power developed by the second number of heat engines each operating at the continuous power and the required power,

$$W_{charge} = min\ [PMC_{n\text{-}1}\text{-}W_{nec}\ ;\ W_{elec\_max}]$$

where "$W_{charge}$" represents the charging power, "$W_{nec}$" represents the required power, "$PMC_{n\text{-}1}$" represents the threshold power, "$W_{elec\_max}$" represents the maximum power, and "min" represents the minimum between the two expressions which are contained in the square brackets and separated by a semi-colon.

8. A method according to any one of Claims 1 to 7,
**characterised in that** if the required power is greater than the threshold power but less than or equal to the sum of the maximum power and of the threshold power, when said main condition is met, an option is applied which is selected from a list including at least one of the following options:

- a') each heat engine which is not at rest is accelerated so as to develop individually the continuous power, the electric motor being acted upon in motor mode to produce power equal to the difference between the required power and a thermal power, said thermal power being equal to the power developed jointly by said heat engines which are not at rest,
- b') the electric motor being acted upon in motor mode to supply electric power, each heat engine which is not at rest is accelerated to supply individually power equal to the required power minus the electric power divided by the second number, the electric power being equal to the minimum between the maximum power and the product of the required power and of a corrective term in accordance with the following relationship, namely:

$$\text{Welec} = \min \left[ W_{nec} \cdot (1 - Ck_{cible}/Ck_{n-1}) \; ; \; W_{elec\_max} \right]$$

wherein "Welec" represents the power developed by the electrical member, "$W_{nec}$" represents the required power, "$1 - Ck_{cible}/Ck_{n-1}$" represents said corrective term, "$Ck_{cible}$" represents a predetermined target fuel consumption per kilometre, "$Ck_{n-1}$" represents a fuel consumption per kilometre corresponding to the consumption per kilometre obtained with one engine at rest and the engines which are not at rest supplying the required power when the required power is less than the threshold power, or supplying the threshold power when the required power is greater than or equal to the threshold power, "$W_{elec\_max}$" represents the maximum power, and "min" represents the minimum between the two expressions which are contained in the square brackets and separated by a semi-colon.

9.  A method according to Claim 8,
    **characterised in that**, when said storage means contains an electric charge which is less than a minimum threshold, the storage means is electrically recharged by running all the heat engines, each heat engine developing power equal to the sum of the required power and of a charging power divided by the first number, the charging power being equal to the minimum between the maximum power and the difference between an optimum power developed by the first number of heat engines each operating at the continuous power and the required power, namely:

$$W_{charge} = \min \left[ PMC_n - W_{nec} \; ; \; W_{elec\_max} \right]$$

where "$W_{charge}$" represents the charging power, "$W_{nec}$" represents the required power, "$PMC_n$" represents the optimum power, "$W_{elec\_max}$" represents the maximum power, and "min" represents the minimum between the two expressions which are contained in the square brackets and separated by a semi-colon.

10. A method according to any one of Claims 1 to 9,
    **characterised in that** if the required power is greater than the sum of the maximum power and of the threshold power, a requirement is evaluated according to which the required power is less than the optimum power developed by the first number of heat engines which each operate at the continuous power.

11. A method according to Claim 10,
    **characterised in that** when said requirement is met, or when said requirement is not met while said storage means comprises an electric charge greater than a minimum threshold, said electrical member is not used, each heat engine being controlled to develop power equal to the quotient of the required power by the first number.

12. A method according to any one of Claims 10 to 11,
    **characterised in that** when said requirement is not met while said storage means comprises an electric charge less than or equal to a minimum threshold, said electrical member is used in electrical generation mode, each heat engine developing power equal to the sum of the required power and of a charging power divided by the first number, the charging power being equal to the minimum between the maximum power and the difference between an optimum power developed by the first number of heat engines which each operate at the continuous power and the required power, namely:

$$W_{charge} = \min \left[ PMC_n - W_{nec} \; ; \; W_{elec\_max} \right]$$

where "$W_{charge}$" represents the charging power, "$W_{nec}$" represents the required power, "$PMC_n$" represents the optimum power developed by all the heat engines operating at the first power, "$W_{elec\_max}$" represents the maximum power, and "min" represents the minimum between the two expressions which are contained in the square brackets and separated by a semi-colon.

13. A method according to any one of Claims 10 to 11,
    **characterised in that**, a flight requiring in succession resting of one heat engine then use of all the heat engines, it is determined which heat engine is to be rested by applying a predetermined cycle.

14. A method according to any one of Claims 1 to 13,
**characterised in that** no heat engine is rested during hovering flight.

15. An aircraft (1) provided with a group (2) of engines developing a required power for driving a rotor (3), said group (2) of engines being provided with at least one electrical member (4) connected to an electrical storage means (5) and with a first number (n) of heat engines (6) which is greater than or equal to two, said electrical member (4) being capable of developing a maximum power ($W_{elec\_max}$) in motor mode,
**characterised in that** it comprises a processing unit (10) connected to said heat engines (6) and to said electrical member (4), said processing unit (10) being connected to a determination means (20) for determining said required power, said processing unit (10) executing stored instructions for implementing the method according to any one of Claims 1 to 14.

16. An aircraft according to Claim 15,
**characterised in that** it comprises at least one item of equipment (30) to be selected from a selection comprising at least:

- a selection means for selecting a strategy (31) which is applied if the required power is less than or equal to a threshold power, when a main condition according to which the group of engines can develop the required power while resting one heat engine is met,
- a selection means for selecting an option (32) which is applied if the required power is greater than the threshold power but less than or equal to the sum of the maximum power and of the threshold power, and if said main condition is met,
- a tactical selection means for determining on one hand a strategy to be applied if the required power is less than or equal to the threshold power, and when a main condition according to which the group of engines can develop the required power while resting one heat engine is met, and on the other hand an option to be applied if the required power is greater than the threshold power but less than or equal to the sum of the maximum power and of the threshold power and if said main condition is met,
- a neutralisation means (33) for neutralising the resting of one heat engine.

## Fig.1

3
3'
3'
MGB
20'
20'
20
L1
L2
6
2
1
4
5
3"
10
30
32
31
33

## Fig.2

C0
C1
C2
P1
P21
P22
P23
P2

## Fig.3

PMCn-1          PMCn-1 + Welec_max

CONF1          CONF2          CONF3

EP 2 548 803 B1

Fig.4

P1

Wnec

$W_{nec} \leq PMC_{n-1}$   NON / OUI

105

$W_{nec} \leq PMC_{n-1} + W_{élec\_max}$   NON / OUI

104   $SOC \leq SOC_{mini}$   NON / OUI   $W_{nec} = PMC_{n-1}$   OUI

107

110   $W_{nec} < PMC_n$   OUI   NON

$\begin{aligned} W_{ENG1} &= 0 \\ \sum_{n-1} W_{ENGi} &= W_{nec} \\ \text{avec } \forall i &\in [2; n], \\ W_{ENGi} &= W_{nec}/(n-1) \end{aligned}$

$\begin{aligned} W_{ENG1} &= 0 \\ W_{ENGi} &= (W_{nec} + W_{charge})/n-1 \\ \text{avec} \\ W_{charge} &= \min (W_{élec\_max} ; PMC_{n-1}-W_{nec}) \end{aligned}$

$SOC \leq SOC_{mini}$   NON / OUI

109

$SOC \leq SOC_{mini}$   NON / OUI

104a

106

$\begin{aligned} \sum_n W_{ENGi} &= (W_{nec} + W_{charge})/n \\ \text{avec} \\ W_{charge} &= \min (W_{élec\_max} ; PMC_n-W_{nec}) \end{aligned}$

108

$SOC < 100\%$   NON / OUI

$\begin{aligned} \sum_n W_{ENGi} &= (W_{nec} + W_{charge})/n \\ \text{avec} \\ W_{charge} &= \min (W_{élec\_max} ; PMC_n-W_{nec}) \end{aligned}$

$SOC < 100\%$   NON / OUI

108a'

$\begin{aligned} W_{ENG1} &= 0 \\ W_{élec} &= W_{nec} - \sum_{n-1} W_{ENGi} \\ \text{avec } \forall i &\in [2; n], W_{ENGi} = PMC \end{aligned}$

$SOC < 100\%$   OUI

112

$SOC < 100\%$   OUI / NON

$\begin{aligned} W_{ENGi} &= (W_{nec} + W_{charge})/n \\ \text{avec} \\ W_{charge} &= \min (W_{élec\_max} ; PMC_n-W_{nec}) \end{aligned}$

111

$\text{avec } \forall i \in [1; n], W_{ENGi} = W_{nec}/n$

$SOC \leq SOC_{mini}$   NON / OUI

$SOC < 100\%$   NON / OUI

CONF3      CONF2      CONF1

P1

Wnec

Fig.5

$W_{nec} \leq PMC_{n-1}$   NON / OUI

105

$W_{nec} \leq PMC_{n-1} + W_{élec\_max}$   NON / OUI

104   $SOC \leq SOC_{mini}$   NON / OUI

$W_{nec} = PMC_{n-1}$   OUI

110

107

Wnec < PMC_n   NON / OUI

SOC <= SOC_mini   NON / OUI

109

$W_{ENG1} = 0$
$\forall i \in [2; n]$,
$W_{ENGi} = (W_{nec} - W_{élec})/(n-1)$
avec $W_{élec} = W_{élec\_max}$

$W_{ENG1} = 0$
$W_{ENGi} = (W_{nec} + W_{charge})/n-1$
avec
$W_{charge} = \min (W_{élec\_max} ; PMC_{n-1}-W_{nec})$

NON   SOC <= SOC_mini   OUI

$W_{ENGi} = (W_{nec} + W_{charge})/n$
avec
$W_{charge} = \min (W_{élec\_max} ; PMC_n-W_{nec})$

108

104b

106

NON   SOC < 100%   OUI

$W_{ENGi} = (W_{nec} + W_{charge})/n$
avec
$W_{charge} = \min (W_{élec\_max} ; PMC_n-W_{nec})$

$W_{ENGi} = (W_{nec} + W_{charge})/n$
avec
$W_{charge} = \min (W_{élec\_max} ; PMC_n-W_{nec})$

112

OUI   SOC < 100%   NON

108a'

$W_{ENG1} = 0$
$W_{élec} = W_{nec} - \Sigma_{n-1}W_{ENGi}$
avec $\forall i \in [2; n]$, $W_{ENGi} = PMC$

SOC < 100%   OUI / NON

avec $\forall i \in [1; n]$, $W_{ENGi} = W_{nec}/n$   111

NON   SOC <= SOC_mini   OUI

NON   SOC < 100%   OUI

CONF3

CONF2

CONF1

28

Wnec

$W_{seuil} \leq W_{nec} \leq PMC_{n-1} + W_{élec\_max}$

NON OUI

CONF3

P1

$W_{nec} \leq PMC_{n-1}$

NON OUI

**Fig.6**

108

$SOC \leq SOC_{mini}$

OUI

NON

108b'

109

$W_{ENGi} = (W_{nec} + W_{charge})/n$
avec
$W_{charge} = min (W_{élec\_max} ; PMC_n - W_{nec})$

$W_{ENG1} = 0$
$\Sigma_{n-1} W_{ENGi} = (W_{nec} - W_{élec})/n-1$
avec $W_{élec} = min [W_{nec} \cdot (1 - Ck_{cible}/Ck_{n-1}) ; W_{élec\_max}]$
& $\forall i \in [2;n], W_{ENGi} = (W_{nec} - W_{élec})/(n-1)$

NON

$SOC < 100\%$

OUI

CONF2

105

$SOC \leq SOC_{mini}$

NON OUI

$W_{nec} = PMC_{n-1}$

OUI

NON

104

107

$W_{ENG1} = 0$
$W_{ENGi} = (W_{nec} + W_{charge})/(n-1)$
avec
$W_{charge} = min (W_{élec\_max} ; PMC_{n-1} - W_{nec})$

104c

$W_{ENG1} = 0$
$W_{ENGi} = (W_{nec} - W_{élec})/n-1$
avec $W_{élec} = min [W_{nec} \cdot (1 - Ck_{cible}/Ck_{n-1}) ; W_{élec\_max}]$
& $\forall i \in [2;n], W_{ENGi} = (W_{nec} - W_{élec})/(n-1)$

NON

$SOC < 100\%$

OUI

106

$W_{ENGi} = (W_{nec} + W_{charge})/n$
avec
$W_{charge} = min (W_{élec\_max} ; PMC_n - W_{nec})$

NON

$SOC < 100\%$

OUI

CONF1

**EP 2 548 803 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2914697
- FR 2933910
- DE 102007017332